# EUROPÄISCHE PATENTSCHRIFT

(11) **EP 4 078 263 B1**
(45) Veröffentlichungstag und Bekanntmachung des Hinweises auf die Patenterteilung: **12.03.2025**
(21) Anmeldenummer: 20835737.6
(22) Anmeldetag: 16.12.2020
(51) Int. Cl.: G02B 21/00, G01N 21/64, G02B 21/16, G02B 21/36, G02B 27/58

(54) **ERZEUGEN EINES LICHTFELDES MIT MEHREREN LOKALISIERTEN NULLSTELLEN**
GENERATING A LIGHT FIELD WITH MULTIPLE LOCALIZED NULL POINTS
PRODUCTION D'UN CHAMP LUMINEUX À PLUSIEURS POINTS NULS LOCALISÉS

(30) Priorität: 19.12.2019 DE 102019135033
(43) Veröffentlichungstag der Anmeldung: 26.10.2022
(73) Patentinhaber: Leibniz-Institut für Photonische Technologien e.V., 07745 Jena (DE)
(72) Erfinder: HEINTZMANN, Rainer, 07745 Jena (DE); JÜGLER, Alexander, 07745 Jena (DE)
(74) Vertreter: Maiwald GmbH
(86) Internationale Anmeldenummer: PCT/EP2020/086368
(87) Internationale Veröffentlichungsnummer: WO 2021/122706

(56) Entgegenhaltungen:
- WO-A1-2013/167479
- DE-A1- 102011 055 367
- US-A1- 2014 042 340

## Beschreibung

Die Erfindung betrifft ein Verfahren zum Erzeugen eines Lichtfelds, das an vorgegebenen Positionen in einem definierten Arbeitsbereich definierte Nullstellen aufweist.

### Stand der Technik

Fluorophore oder andere Punktemitter lassen sich in einem Arbeitsbereich, etwa auf einer zu untersuchenden Probe, unter Ausnutzung ihres Sekundärlichts (z.B. Lumineszenz) lokalisieren. Wenn ein Punktemitter mit Anregungslicht einer passenden Wellenlänge bestrahlt wird, strahlt er seinerseits Sekundärlicht (Streulicht derselben oder Lumineszenzlicht einer anderen Wellenlänge) ab. Wenn das Lichtfeld des Anregungslichts nun aber eine Nullstelle hat, die genau auf der Position des Punktemitters liegt, dann strahlt der Punktemitter kein bzw. minimal Sekundärlicht ab. Unter einer Nullstelle verstehen wir hier ein deutliches lokales Intensitätsminimum. Durch das sequentielle Abtasten einer ausgedehnten Probe unter Überwachung der Intensität des Sekundärlichts kann also ein Punktemitter lokalisiert werden. Ein entsprechendes Verfahren ist aus (F. Balzarotti et al., "Nanometer resolution imaging and tracking of fluorescent molecules with minimal photon fluxes", Science 355, 606-612 (2017)) bekannt. Eine Abwandlung dieses Verfahrens ist aus der DE 10 2016 119 262 A1 bekannt.

Die DE 10 2011 055 367 A1 offenbart ein Verfahren und eine Vorrichtung zum Verfolgen der Bewegung eines Partikels, insbesondere eines einzelnen Moleküls, in einer Probe. Hierbei wird ein Minimum einer Intensitätsverteilung, mit der die Probe bestrahlt wird, so dem sich in der Probe bewegenden Partikel nachgeführt, dass eine Rate der von dem Partikel emittierten Photonen minimal bleibt.

Die WO 2013/167 479 A1 offenbart ein spezielles Mikroskop für die hochauflösende Abbildung einer interessierenden Struktur in einer Probe, die eine Substanz mit einem ersten Zustand mit ersten spektralen Eigenschaften und einen zweiten Zustand mit zweiten spektralen Eigenschaften aufweist.

Die US 2014/042 340 A1 offenbart ein weiteres Verfahren zur Verfolgung eines Partikels, bei dem ein Minimum einer Intensitätsverteilung, mit der die Probe bestrahlt wird, so dem sich in der Probe bewegenden Partikel nachgeführt wird, dass eine Rate der von dem Partikel emittierten Photonen minimal bleibt. Die Position des Minimums wird als die Position des Partikels in der Probe gewertet.

### Aufgabe und Lösung

Eine Aufgabe der vorliegenden Erfindung ist, ein Verfahren bereitzustellen, mit dem ein Arbeitsbereich mit einem Lichtfeld beaufschlagt werden kann, das mehrere unabhängig voneinander in dem Arbeitsbereich positionierbare Nullstellen aufweist. Eine weitere Aufgabe der Erfindung ist, ein Verfahren bereitzustellen, mit dem mehrere Punktemitter gleichzeitig in einem ausgedehnten Arbeitsbereich lokalisiert und/oder verfolgt werden können.

Diese Aufgaben werden gelöst durch ein Verfahren zum Erzeugen eines Lichtfeldes gemäß Hauptanspruch sowie durch ein Verfahren zum Lokalisieren und/oder Verfolgen von Punktemittern gemäß Nebenanspruch. Weitere vorteilhafte Ausgestaltungen ergeben sich aus den darauf rückbezogenen Unteransprüchen.

### Offenbarung der Erfindung

Im Rahmen der Erfindung wurde ein Verfahren zum Erzeugen eines Lichtfeldes in einem vorgegebenen Arbeitsbereich mittels einer zumindest teilweise kohärenten Lichtquelle entwickelt. Die kohärente Lichtquelle kann insbesondere beispielsweise ein Laser sein. Aber auch teilkohärentes Licht, wie es z.B. aus einer Lampe mit Farbfilter oder aus lichtemittierenden Dioden (LEDs) ist dazu geeignet. Licht aus der Lichtquelle wird mindestens einem Modulator zugeführt, so dass der Modulator unterschiedlichen Anteilen des Lichts unterschiedliche Änderungen mindestens einer Eigenschaft des Lichts aufprägt. Beispiele für solche Eigenschaften sind die Phase, die Polarisation sowie die Intensität des Lichts. Das Licht wird anschließend in den Arbeitsbereich geführt. Der Arbeitsbereich kann beispielsweise die Probenebene bzw. Bildebene in einem Mikroskop sein. Der Modulator wird mit einem Nullstellen-Ansteuermuster angesteuert dergestalt, dass die Summe der Amplitudenverteilungen, der über den Modulator geführten Lichtanteile, in dem Arbeitsbereich an mindestens zwei unabhängig voneinander vorgebbaren Positionen Nullstellen aufweist. Diese Nullstellen grenzen jeweils an Bereiche an, in denen die besagte Summe der Amplitudenverteilungen von Null verschieden ist. Als Nullstelle wird dabei ein eingegrenztes lokales Intensitäts-Minimum bezeichnet. Diese Nullstelle kann dabei in einer Raumrichtung oder aber auch in zwei oder drei Raumrichtungen eingegrenzt sein und wird dann als 1D-Nullstelle, 2D-Nullstelle oder 3D-Nullstelle bezeichnet.

Unter einer Nullstelle kann insbesondere beispielsweise ein Ort im Lichtfeld verstanden werden, an dem eine möglichst geringe Intensität nahe Null erzeugt wird, auch wenn sich eine tatsächliche Null praktisch nicht erreichen lässt. Eine scharf eingegrenzte 1D/2D/3D-Nullstelle kann also insbesondere beispielsweise einen Intensitätsverlauf mit einem lokalen Minimum, welcher eine starke Krümmung in einer, zwei bzw. drei Raumrichtungen besitzt, bezeichnen.

Unter einer starken Krümmung kann insbesondere beispielsweise verstanden werden, dass in einem vorgegebenen Abstand, wie beispielsweise λ/5 (oder geringer), zur Nullstelle ein deutlicher Anstieg der Beleuchtungsintensität erreicht wird, welcher detektierbar bzw. für Messungen verwendbar ist. Hierbei kann unter einem deutlichen Anstieg insbesondere beispielsweise verstanden werden, dass in dem vorgegebenen Abstand zur Nullstelle die Beleuchtungsintensität um mindestens 3% des zur Nullstelle nächstliegenden höchsten Maximums (beiderseits der Nullstelle) gegenüber der Nullstelle zugenommen hat.

Durch die unterschiedlichen Änderungen, etwa Phasenänderungen, die verschiedene Anteile des Lichts erfahren, lässt sich eine konstruktive oder auch destruktive Interferenz zwischen diesen Anteilen einstellen. Da das Licht zumindest teilweise kohärent ist, bleibt diese Phasenbeziehung, und daher auch die Interferenz, auf dem Weg zwischen dem Modulator und dem Arbeitsbereich erhalten. Wenn also Nullstellen in beliebiger Zahl an bestimmten Ort im Arbeitsbereich gewünscht sind, lässt sich beispielsweise mit einem parametrisierten Ansatz ein Nullstellen-Ansteuermuster errechnen, das das Gewünschte leistet. Der Modulator kann dabei in beliebigen optischen Ebenen in Bezug auf den Arbeitsbereich platziert werden. Diese optischen Ebenen sind beispielsweise zum Arbeitsbereich konjugierte Ebenen, welche im Weiteren als Bildebene bezeichnet werden oder Ebenen, welche zur Bildebene in einer Fourierbeziehung (Fouriertransformation) stehen, welche im Weiteren als Fourierebene bezeichnet werden. Die Fourierebenen sind die konjugierten Ebenen der hinteren Brennebene (engl. Back Focal Plane, betrachtet für das Emissionslicht, also die vordere Brennebene des abbildenden Beleuchtungssystems) eines optisch abbildenden Systems. Jedoch sind auch alle weiteren Positionen des Modulators außerhalb der bezeichneten Ebenen denkbar. Entscheidend ist lediglich die richtige Wahl des Nullstellen-Ansteuermusters entsprechend der gewählten optischen Ebene.

Gerade durch die Möglichkeit, Nullstellen an mehreren unabhängig voneinander vorgebbaren Positionen zu erzeugen, unterscheidet sich das hier vorgeschlagene Verfahren von anderen Verfahren, die beispielsweise ein räumliches Muster von Nullstellen mit einer festen Periodizität erzeugen, wie dies z.B. bei der Methode der strukturierten Beleuchtung oder auch SIMFlux geschieht.

Dabei ist die Genauigkeit, mit der die Nullstellen im Arbeitsbereich positioniert werden können, nicht durch die räumliche Auflösung beschränkt, mit der das Nullstellen-Ansteuermuster im Modulator erzeugt werden kann. Ursache hierfür ist, dass es gemäß Anspruch 1 in dem Nullstellen-Ansteuermuster neben einer räumlichen Verteilung von Bereichen, die die Phase des auf den Modulator auftreffenden Lichts ändern, als zusätzlichen Freiheitsgrad noch den jeweiligen lokalen Betrag dieser Phasenänderung gibt. Die Phasenauflösung, mit der die Phase geändert werden kann, bei den meisten Modulatoren zwar ebenfalls technisch beschränkt, reicht aber aus, um die Positioniergenauigkeit deutlich über das Maß hinaus zu steigern, das die Pixelierung des Modulators für sich genommen hergibt und sich für die Verteilung der Nullstellen durch pixelgenaue Verschiebung eines Nullstellen-Ansteuermusters auf einem in Pixel unterteilten Modulator ergibt.

Das gemäß dem Verfahren erzeugte Lichtfeld ist insbesondere vorteilhaft für das Arbeiten mit Fluorophoren oder anderen Punktemittern auf einer ausgedehnten Probe, die den Arbeitsbereich bildet. Mit mehreren unabhängig voneinander positionierbaren Nullstellen lassen sich mehrere der Punktemitter, die sich in deren Nähe befinden unabhängig voneinander anregen, lokalisieren und/ oder verfolgen. Dies spart sehr viel Messzeit ein und ermöglicht die simultane Messung von Dynamiken mehrerer sich bewegender Punktemitter, gegenüber einer Messung, bei der nur mit einer Nullstelle gemessen wird, etwa indem eine einzige Nullstelle über die Probe gescannt wird. Unter Anregung wird dabei das Beaufschlagen des Punktemitters mit solchem Licht aus der Lichtquelle verstanden, das diesen Punktemitter zum Aussenden von Streulicht, Lumineszenzlicht oder anderem Sekundärlicht veranlasst. Durch Ausnutzen von besonderen Eigenschaften einiger Arten von Punktemittern, beispielsweise von Fluorophoren wie Alexa Fluor^{®} 647 oder P AmCherry, kann erreicht werden, dass auch bei einer hohen Punktemitter-Dichte die Punktemitter nur vereinzelt/ optisch isoliert Sekundärlicht aussenden und so die Lokalisierung und oder das Verfolgen der Position besonders einfach erfolgt. Diese optische Isolierung der dicht gepackten Punktemitter wird in diesem Fall durch eine vorausgegangene Aktivierung von vereinzelten Punktemittern in stochastischer Weise auf der Fläche der ausgedehnten Probe ermöglicht. Nur aktivierte Punktemitter können dann zur Aussendung von Sekundärlicht angeregt werden. Vereinzelte bzw. optisch isolierte Punktemitter bedeutet dabei, dass innerhalb eines Mindestabstands zu einem nächsten Punktemitter keine weiteren anregbaren, gleichartigen Punktemitter vorhanden sind. Dieser Mindestabstand definiert dabei den minimalen Abstand zweier Punktemitter, bei dem man deren ausgesendetes Sekundärlicht getrennt erfassen kann, was oft auch als Auflösungsgrenze bezeichnet wird. Dieser Mindestabstand wird eingehalten, falls der Abstand mindestens gleich der Beugungsgrenze bei der Wellenlänge des Sekundärlichts der Punktemitter entspricht.

Beim Scannen einer einzigen Nullstelle, die von Bereichen mit einer von Null verschiedenen Intensität umgeben ist, werden hingegen mit einer vergleichsweise hohen Wahrscheinlichkeit mehrere Punktemitter in diesen Bereichen gleichzeitig aktiviert und müssen aus der Messreihe entfernt werden, oder der Aktivierungsvorgang muss vom eigentlichen Lokalisierungsvorgang getrennt werden.

Weiterhin genügt die normale Ansteuerelektronik des Modulators, um die Nullstellen zu erzeugen. Handelsübliche optische Elemente wie Linsen, Masken, Aperturblenden und Spiegel können jedoch nach dem modulierten Lichtfeld bis zu dem Arbeitsbereich bewusst so platziert werden, dass diese noch auf die erhaltenen Nullstellen bzw. auf das Lichtfeld im Allgemeinen im Arbeitsbereich kalkuliert Einfluss nehmen. Ausgehend von den gewünschten Positionen der Nullstellen lässt sich das passende Nullstellen-Ansteuermuster mit einem handelsüblichen Computer errechnen.

Dabei muss nicht nur ein einziger Modulator verwendet werden, sondern die Modulation kann auch auf mehrere Modulatoren, bzw. einen oder mehrere Modulatoren und zusätzliche optische Elemente, aufgeteilt werden. So kann es beispielsweise bei Modulatoren einen Zielkonflikt zwischen einer möglichst guten Phasenauflösung einerseits und einer schnellen Antwortzeit andererseits geben.

Beispielsweise kann ein erster Modulator verwendet werden, um Nullstellen langsam, aber mit hoher Genauigkeit, auf den Arbeitsbereich zu platzieren. Ein zweites optisches Element, welches auch ein Modulator sein könnte, kann dann verwendet werden, um die Position der Nullstellen schnell um geringe Beträge zu ändern, um die Genauigkeit der Positionsschätzung durch Messung nur weniger Photonen von aus dem Arbeitsbereich emittiertem Sekundärlicht zu verbessern. Diese schnelle Positionsänderung kann vorteilhaft mit technischen Mitteln erfolgen, die von den für die langsame Verschiebung verwendeten Mitteln getrennt sind. Es können beispielsweise resonante oder nicht resonante Galvanometerspiegel oder Digital Micromirror Devices verwendet werden, aber auch andere Mittel, die geeignet sind, ein Bild gleichzeitig zu verschieben. Beispiele hierfür sind eine vibrierend rotierende Glasplatte, eine vibrierende Verschiebung des Modulators oder Ähnliches.

Zur schnellen Änderung der Nullstellenposition ohne Änderung des Nullstellen-Ansteuermusters können beispielsweise hinter dem Modulator (oder in einer konjugierten Ebene) mechanisch austauschbare Glasplatten unterschiedlicher Dicke, aber mit gleichem Ausrichtungswinkel (beispielsweise in einem Rad ähnlich einem Filterrad) so positioniert werden, dass das Licht jeweils unterschiedlich parallel versetzt wird. Durch eine geeignete unterschiedliche Glasdicke kann dieser parallele Versatz gerade so gewählt werden, dass die Nullstellen im Arbeitsbereich (Probenebene) eine wählbare Distanz z.B. im wenigen 10nm-Bereich (oder weniger) verschoben werden.

Statt der austauschbaren Glasplatten kann beispielsweise auch ein optisches Gerät verwendet werden, bei welchen man eine beispielsweise plane Glasplatte um einen definierbaren Winkel zur optischen Achse verstellen kann (siehe die Realisierung z.B. im Produkt "ApoTome" der Firma Zeiss). In einer besonders vorteilhaften Ausführung rotiert eine plane Glasplatte, mit einem konstanten Winkel α zur optischen Achse, um die optische Achse mit einem Winkel φ(t). Dadurch kann ein globaler Versatz aller zuvor über den Modulator erzeugten Nullstellen erzeugt werden. Dies kann beispielsweise derart genutzt werden, dass in einem ersten Lokalisationsschritt mehre Nullstellen möglichst genau auf die Fluorophore positioniert werden und dann alle Nullstellen um den gleichen Betrag versetzt werden. Neben einer schnellen Lokalisierung ohne aufwändigere Rückkopplung ist ebenfalls vom Vorteil, dass für die spätere Positionsbestimmung für jedes Partikel mit dem gleichen Nullstellenverlauf gerechnet werden kann.

Auch kann ein erster Modulator dazu verwendet werden, intensive lokal begrenzte Lichtmuster auf einem zweiten Modulator zu erzeugen, wobei der zweite Modulator diesem Licht dann die Nullstelle und die genaue Verschiebung aufprägt. Dadurch lässt sich das zur Verfügung stehende Licht effizient auf mehrere solche Nullstellen verteilen.

In einer besonders vorteilhaften Ausgestaltung wird ein Modulator mit einer ebenen aktiven Fläche gewählt. Dieser Modulator ist dazu ausgebildet, Lichtanteilen, die durch die aktive Fläche hindurchtreten und/oder von der aktiven Fläche reflektiert werden, Phasenänderungen aufzuprägen. Der Modulator kann insbesondere beispielsweise ein Phasen-Spatial Light Modulator (Phasen-SLM) sein. Dieser Phasen-SLM kann nur Phasen des Lichtfeldes ändern, aber nicht dessen Amplituden (bzw. Intensitäten). Die gewünschten Positionen der Nullstellen im Arbeitsbereich lassen sich dann in Orte auf der aktiven Fläche, an denen die Phase des Lichts jeweils geändert werden soll, und Beträge, um die die Phase jeweils zu ändern ist, übersetzen.

In einer besonders vorteilhaften Ausgestaltung besteht das Nullstellen-Ansteuermuster aus einer beliebigen Anzahl von Sub-Nullstellen-Ansteuermustern, welche jeweils eine oder mehrere (etwa zwei) unabhängige Nullstellen erzeugen können, indem das Lichtfeld auf unterschiedliche Art beeinflusst werden kann. Die Sub-Nullstellen-Ansteuermustern wiederum können aus Sub-Sub-Nullstellen-Ansteuermustern bestehen, welche als Teile der Sub-Ansteuermuster anzusehen sind. Die Sub-Ansteuermuster können - müssen aber nicht - auf den gleichen Grundmustern beruhen. In dieser besonders einfachen Ausführungsform können dann beispielsweise bestimmte Parameter der Sub-Sub-Nullstellen-Ansteuermuster geändert werden, um die jeweiligen Nullstellen unabhängig voneinander zu steuern. Im Folgenden wird der Übersichtlichkeit halber der Begriff "Sub-Ansteuermuster" als Synonym für den Begriff "Sub-Nullstellen-Ansteuermuster" verwendet. Weiterhin wird der Begriff "Sub-Sub-Ansteuermuster" als Synonym für den Begriff "Sub-Sub-Nullstellen-Ansteuermuster" verwendet.

In einer besonders vorteilhaften Ausgestaltung werden mindestens zwei aneinander angrenzende Bereiche der oben beschriebenen, phasenändernden aktiven Fläche, welche sich beispielsweise in der Bildebene befinden kann, so angesteuert, dass zwischen Lichtanteilen, auf die diese Bereiche jeweils wirken, eine mittlere Phasenverschiebung von π für das diese Bereiche verlassende Licht eingestellt wird. Diese aneinander angrenzenden Bereiche können beispielsweise jeweils zu Sub-Sub-Nullstellen-Ansteuermustern korrespondieren. Bei inhomogener Beleuchtung kann das Mittel der Phasenverschiebung insbesondere mit der Amplitudenstärke der Beleuchtung gewichtet sein. Lichtanteile aus den aneinander angrenzenden Bereichen können dann destruktiv miteinander interferieren, wodurch in der Probe ein Nulldurchgang der Amplitude des Lichts, und damit eine eng begrenzte Nullstelle (lokales Minimum) entsteht. Die gewünschten Positionen der Nullstellen im Arbeitsbereich lassen sich mit den Mitteln der Strahlenoptik in einsichtiger Weise in Positionen der aneinander angrenzenden Bereiche auf der aktiven Fläche, die zur Erzeugung dieser Nullstellen anzusteuern sind, übersetzen. Dabei ist zu erwähnen, dass die Größen der Nullstellen im Allgemeinen nicht mit der Größe der nullstellenerzeugenden Bereiche korrespondieren. Entscheidender ist die Ausgestaltung der nullstellenerzeugenden Bereiche, welche beispielsweise Einfluss darauf hat, in welchen Raumrichtungen die Nullstelle eingegrenzt ist.

Die aktive Fläche des Modulators kann insbesondere beispielsweise in Pixel unterteilt sein, die separat voneinander ansteuerbar sind. Diese Pixel können dann als Grundbausteine für die Erzeugung beliebiger Nullstellen-Ansteuermuster dienen.

Wenn beispielsweise auf einer in Pixel unterteilten aktiven Fläche aneinander angrenzende, beispielsweise rechteckige, Bereiche so angesteuert werden, dass sich zwischen den von diesen Bereichen beeinflussten Lichtanteilen eine Phasenverschiebung von π einstellt, bilden vorteilhaft beide Rechtecke zusammen ein weiteres Rechteck, dessen Seitenlängen geraden Anzahlen von Pixeln entsprechen, beispielsweise 6× 10 Pixeln. Dieses spezielle Nullstellen-Sub-Ansteuermuster mit seinen beiden Rechtecken als Sub-Sub-Nullstellen-Ansteuermuster wird im weiteren Verlauf als "Phasen-Box" bezeichnet. Die Algorithmen für die Berechnung der Positionen der rechteckigen Bereiche aus den gewünschten Positionen der Nullstellen werden dann besonders einfach. Gleiches gilt, wenn die Bereiche nicht rechteckig sind, sondern beispielsweise rund (etwa kreisförmig) mit Punktsymmetrie zu einem Zentrum. Beispielsweise können kreisförmige Bereiche in ein Quadrat von 11×11 Pixeln einbeschrieben sein. Durch eine oft auf Phasen-SLMs vorhandene Adressstruktur mit dem Abstand von jeweils zwei Pixeln können auch andere Boxgrößen besonders sinnvoll sein. Es kann auch sinnvoll sein, eine ungerade Anzahl von Pixeln als Kantenlänge zu wählen und beispielsweise die Mitte absichtlich unmoduliert zu lassen. Auch kann es sinnvoll sein, gerade und ungerade Kantenlängen zu kombinieren.

In einer besonders vorteilhaften Ausgestaltung sind die Positionen der Nullstellen mit einer besseren Genauigkeit vorgebbar als definiert durch die Verschiebung von Nullstellen, die sich durch eine Translation des Nullstellen-Ansteuermusters auf der aktiven Fläche des Modulators um ein Pixel in mindestens einer Koordinatenrichtung ergeben würde. Wie zuvor erläutert, können hierzu andere Freiheitsgrade (etwa das Einbringen von Gittern mit durch die Phasenänderung einstellbarem Phasenhub, die zu einer Amplitudenänderung des direkt in der Nullten Ordnung von der Box reflektierten Lichts führen) genutzt werden, die nicht unmittelbar an die Auflösung der Pixel auf der aktiven Fläche gekoppelt sind.

In einer besonders vorteilhaften Ausgestaltung wird der Modulator zu einem ersten Zeitpunkt mit einem ersten Nullstellen-Ansteuermuster und zu einem zweiten, späteren Zeitpunkt mit mindestens einem zweiten Nullstellen-Ansteuermuster angesteuert. Dabei unterscheiden sich mindestens zwei Nullstellen-Ansteuermuster dahingehend, dass sich die Position mindestens einer Nullstelle im Arbeitsbereich um einen geringeren Betrag ändert als sich durch die Translation des ersten Nullstellen-Ansteuermusters auf der aktiven Fläche des Modulators um ein Pixel ergeben würde.

Die Nullstellen können also im Arbeitsbereich um Sub-Pixel-Beträge verschoben werden, gemessen an der Verschiebung der Nullstelle, die man durch Verschieben der dafür relevanten Modulatorpixel um genau einen Pixel erhält. Dementsprechend kann die Genauigkeit, mit der beispielsweise Punktemitter im Arbeitsbereich verfolgt werden können, deutlich gesteigert werden. Als Feedback für das Verfolgen kann beispielsweise die Intensität von Sekundärlicht überwacht werden, das die Punktemitter in Folge einer Anregung durch das mit dem Modulator erzeugte Lichtfeld emittieren. Ein Punktemitter wird nur dann überhaupt nicht (bzw. minimal) zur Emission von Sekundärlicht angeregt, wenn er genau von einer Nullstelle des Lichtfeldes im Arbeitsbereich abgedeckt wird. Bereits bei einer relativen Verschiebung von Nullstelle und Punktemitter von z.B. 1 nm wird schon deutlich mehr messbares Sekundärlicht emittiert, aus dem sich auf die Distanz zur Nullstelle schließen lässt.

In einer weiteren besonders vorteilhaften Ausgestaltung ist mindestens ein Sub-Nullstellen-Ansteuermuster des Nullstellen-Ansteuermusters aus mindestens zwei Sub-Sub-Nullstellen-Ansteuermustern überlagert oder in anderer Weise zusammengesetzt. Das Licht, das durch jedes dieser Sub-Sub-Nullstellen-Ansteuermuster beeinflusst wird, erzeugt am vorgegebenen Ort mindestens einer Nullstelle jeweils eine komplexe Amplitude. Die Sub-Sub-Ansteuermuster sind nun so gewählt, dass die Überlagerung dieser komplexen Amplituden am vorgegebenen Ort der Nullstelle Null bzw. ein betragsmäßiges Minimum nahe Null ergibt.

Auf diese Weise lässt sich ausgehend von dem Wunsch, an einem konkreten vorgegebenen Ort eine Nullstelle zu erzeugen, besonders einfach ein Sub-Nullstellen-Ansteuermuster gewinnen, das eine Nullstelle an genau diesem Ort liefert. Insbesondere kann durch eine Änderung der komplexen Amplituden des Lichtfelds mittels der Sub-Sub-Nullstellen-Ansteuermuster die Position der erzeugten Nullstelle kontrolliert verschoben werden.

In einer weiteren besonders vorteilhaften Ausgestaltung ist mindestens ein Sub-Nullstellen-Ansteuermuster aus mindestens drei Sub-Sub-Ansteuermustern überlagert oder in anderer Weise zusammengesetzt. Das Licht, das durch jedes dieser Sub-Sub-Ansteuermuster beeinflusst wird, erzeugt am vorgegebenen Ort mindestens einer Nullstelle jeweils eine komplexe Amplitude. Die Sub-Sub-Ansteuermuster sind nun so gewählt, dass die Überlagerung dieser komplexen Amplituden im Arbeitsbereich mindestens zwei Nullstellen erzeugt. Mit einer solchen Anordnung können die beiden Nullstellen unabhängig voneinander um Sub-Pixel-Beträge verschoben sowie auch in einen sehr geringen Abstand zueinander gebracht werden.

Um ein einfaches Verschieben von Nullstellen zu ermöglichen, enthält vorteilhaft mindestens ein Sub-Sub-Ansteuermuster ein zusätzliches Ansteuer-Element in der Ebene der aktiven Fläche, welches geeignet ist, die durch dieses Sub- Sub-Ansteuermuster erzeugte Amplitudenstärke am vorgegebenen Ort der Nullstelle zu beeinflussen. Dieses Ansteuer-Element kann beispielsweise ein periodischer Anteil des Sub-Sub-Ansteuermusters oder eine Fresnel-Zonen-Platte mit einstellbarer Fokallänge sein. Letzteres kann beispielsweise bei einem phasenändernden Modulator durch das Hinzufügen einer Fresnel-Zonen-Platte ("Fresnel-Linse") zu mindestens einem Sub-Sub-Nullstellen-Ansteuermusters umgesetzt werden. Durch Anpassen der fokalen Länge der Fresnel-Linse wird dem verlassenden Lichtfeld aus diesem Sub-Sub-Ansteuermuster ein zusätzlicher Fokus-bzw. Defokus-Term aufgeprägt, was dazu führt, dass die erzeugte Amplitudenstärke am vorgegebenen Ort der Nullstelle beeinflusst werden kann. Diese Beeinflussung der erzeugten Amplitudenstärke am vorgegebenen Ort der Nullstelle kann aber auch durch das Hinzufügen eines geeigneten periodischen Musters, wie beispielsweise eines Gitters, umgesetzt werden, von dem nur ein Teil des gebeugten Lichts (z.B. nur die Nullte Ordnung) die Ebene der zu erzeugenden Nullstellen erreicht. Die Veränderung der Amplitudenstärke des Lichts von einem (oder mehreren) der Sub-Sub-Ansteuermuster führt zu einer sub-pixel Verschiebung der Nullstelle. Ggf. können an der gewünschten Nullstellenposition nicht präzise passende Phasen des Lichts der Sub-Sub Ansteuermuster durch zusätzlich aufgeprägte Offset-Phasen in den Sub-Sub Ansteuermustern ausgeglichen werden.

In einer besonders vorteilhaften Ausgestaltung wird als phasenändernder Lichtfeld-Modulator ein Phasen-SLM verwendet, mit welchem man nur die Phasen des Lichtfeldes ändern kann. Damit man aber auch die Intensitäten (bzw. Amplituden) mit dem Phasen-SLM ändern kann - welches ohne Weiteres bautechnisch nicht möglich ist, wird ein Tiefpassfilter in den Strahlengang integriert, beziehungsweise die Tiefpassfilter-Eigenschaft eines vorhandenen optischen Bauteils (z.B. des Mikroskopieobjektivs) dazu genutzt. Als Tiefpassfilter kommen dabei beispielsweise eine Aperturblende, eine Pupillenblende oder eine Maske in der Fourierebene eines optischen Systems in Frage. Dann wird z.B. in beiden Hälften der Phasen-Box ein zusätzliches Gitter erzeugt. Da das zusätzliche Gitter so hochfrequent gewählt worden ist, dass dessen gebeugtes Licht von dem Tiefpassfilter geblockt wird und somit die durch das Gitter aus der Abbildung entfernte Amplitude nicht zum Bild dieses Teils der Box in der Probe beiträgt, kann z.B. durch eine symmetrisch ausgebildete Phase des Gitters (+/- Phasenwert P), über die Wahl des Phasenwertes P, die Amplitudenstärke des Bildes jedes Teils der Phasen-Box in der Bildebene jeweils unabhängig kontrolliert werden.

Praktisch bedeutet dies dann, dass eine größere relative Differenz der Phasenwerte +/- P (Modulationstiefe) des zusätzlichen angelegten Gitters bewirkt, dass bei ansonsten unveränderten Bedingungen insgesamt mehr Licht aus diesem Bereich der Phasen-Box geblockt wird.

Für eine Erhöhung der Nullstellenqualität bei sequentieller 2D Lokalisierung, z.B. durch Rotieren des Nullstellenansteuerungsmusters in der Bildebene um 90°, ist es vorteilhaft, die Polarisation des Lichtes vor dem Objektiv ebenfalls zu drehen, damit diese azimutal bleibt. Hierfür bieten sich aktive (z.B. Flüssigkristallmodulatoren, elektrooptische Modulatoren oder motorisierte λ/2 -Platte) und auch passive optische Elemente (z.B. segmentierte λ/2 Platte in der Fourierebene) an.

Durch Verändern der relativen Gesamtphase und der beschriebenen GitterModulationstiefe zwischen den beiden Hälften der "Phasen-Box" ist es möglich, die Nullstelle von der Ursprungsposition sub-pixel-genau zu verschieben und doch qualitativ eine tiefe (nahe bei Null) und "scharfe" (mit hohen Maxima in der Nähe) Nullstelle zu behalten. Praktisch bedeutet dies aber oft, dass bei einer um Sub-Pixel verschobenen Nullstelle eine exakte 0-π Phasendifferenz der beiden Hälften der Box nicht mehr eingehalten wird, so dass sich dann an der gewünschten Sub-Pixel-Position diese 0-π Phasendifferenz ergibt und gleichzeitig dort die jeweiligen Amplituden der Beiträge von den jeweiligen Hälften so angepasst sind, dass sie dort destruktiv interferieren und somit eine Nullstelle ergeben.

Um den Algorithmus der Positionierung einfach zu halten, kann es sinnvoll sein eine Hälfte der Phasen-Box immer mit einem fixen Gitter um eine fixe mittlere Phase herum zu versehen, während nur die andere Hälfte der Box die Gittermodulationstiefe (+/- P) und Relativphase F im Vergleich zur mittleren Phase der anderen "Phasen-Box" variiert.

Da dem Phasen-SLM durch seine Pixelierung und auch durch die erzielbare Phasengraduierung (z.B. 8 Bit) oft technische Grenzen gesetzt sind, kann es aber auch insbesondere sinnvoll sein, auf beiden Seiten der Phasen-Box sowohl P als auch F zu variieren. Durch Simulationen und/oder Kalibrationslösungen können optimale Werte für Subpixelverschiebungen unter Erhaltung einer möglichst guten Nullstelle ermittelt werden, die sich dann auch im Sinne einer "Look-Up" Tabelle einsetzen lassen.

Durch zusätzliche Modulation mit dem Gitter können die Positionen von Nullstellen insbesondere in einer linearen Richtung verschoben werden. Um die Positionen von Nullstellen zweidimensional zu kontrollieren, kann für die zweite Richtung ein neues Paar aus Nullstellen-Ansteuermustern erzeugt werden, welches gegenüber den für die erste Richtung verwendeten Nullstellen-Ansteuermustern um 90° gedreht ist.

Es können aber auch beispielsweise Sub-Nullstellen-Ansteuermuster verwendet werden, die etwa aus vier Teilen bestehen und ein lokales Minimum erzeugen, das lokal zweidimensional eng eingegrenzt ist. Analog zum zuvor Beschriebenen können die einzelnen Teile dieses Musters mit einem Gitter oder anderen periodischen Mustern moduliert werden, um die Position der Nullstelle in zwei Dimensionen jeweils subpixelgenau zu kontrollieren.

Die Sub-Nullstellen-Ansteuermuster können auch im Fall der Verwendung zweier Muster viele verschiedene gleiche Formen (z.B. Halbkreise, Dreiecke) oder auch verschiedene Formen aufweisen. Verschiedene Formen oder Größen können insbesondere auch sinnvolle Mittel zur Beeinflussung der jeweiligen Amplitudenstärken sein und somit zur Kontrolle der Nullstellenposition sein.

Um ein eng eingegrenztes lokales Minimum entlang der optischen Achse zu erhalten, kann das Sub-Nullstellen-Ansteuermuster, beispielsweise die beschriebene Phasen-Box, mit einem inneren und einem äußeren Bereich konstruiert werden. Diese Bereiche können zusammenwirken, um ein scharfes Minimum entlang der optischen Achse zu erzeugen. Auf diese Bereiche kann das zuvor beschriebene Prinzip zur Anpassung der Amplitudenstärke am vorgegebenen Ort der Nullstelle gleichermaßen angewendet werden, um die Positionen der Nullstellen sub-pixelgenau kontrollieren zu können. Das Prinzip kann verallgemeinert werden, um auch Nullstellen zu erzeugen, die in zwei oder drei Dimensionen scharf eingegrenzt sind.

Man kann etwa Sub-Nullstellen-Ansteuermuster erstellen, die z.B. aus vier Sub-Sub-Nullstellen-Ansteuermustern bestehen und eine Nullstelle erzeugen, die zweidimensional eng eingegrenzt ist. Durch ein Prinzip analog zu dem beschriebenen mit rechteckigen "Phasen-Boxen" zur Erstellung von eindimensionalen Nullstellen, lässt sich dann auch die zweidimensionale Position senkrecht zur optischen Achse subpixelgenau kontrollieren.

Durch Kombination der beschriebenen Sub-Nullstellen-Ansteuermuster kann man so analog die Erzeugung der Nullstellen in allen drei Raumrichtungen (X, Y, Z) umsetzen. Man kann so Kontrolle über die Nullstelle in allen Raumrichtungen einzeln, sequentiell kombiniert oder gleichzeitig in allen möglichen Kombinationsmöglichkeiten (XY, XZ, YZ oder XYZ) erhalten. Die Raumrichtung "Z" liegt dabei parallel zur optischen Achse. Die Raumrichtungen "X", "Y", "Z" stehen alle senkrecht zu einander. Die genannten Raumrichtungen sind ausdrückbar durch kartesische Einheitsvektoren, welche senkrecht zu einander stehen und damit linear unabhängig sind.

Es können weiterhin noch Sub-Nullstellen-Ansteuermuster mit mehreren Sub-Sub-Nullstellen-Ansteuermustern erstellt werden, welche jeweils mehr als eine Nullstelle im Arbeitsbereich erzeugen. Diese Nullstellen können dann auch innerhalb des Mindestabstands liegen, in dem die Punktemitter als optisch isoliert angesehen werden. Beispielsweise kann zur Erzeugung von zwei 1D- Nullstellen ein Sub-Nullstellen-Ansteuermuster in einem phasenändernden Modulator gewählt werden, welches aus drei Sub-Sub-Ansteuermustern besteht. Diese drei Sub-Sub-Ansteuermuster setzen sich beispielsweise aus rechteckigen Bereichen zusammen, welche jeweils eine Kantenlänge von 6x10 Pixel haben, sodass man dann für das gesamte, rechteckige Sub-Nullstellen-Ansteuermuster eine Kantenlänge von 18x10 Pixel erhält. Die Sub-Ansteuermuster sind so gewählt, dass aneinander angrenzende rechteckige Bereiche so angesteuert werden, dass sich zwischen den von diesen Bereichen beeinflussten Lichtanteilen eine Phasenverschiebung von π einstellt. Analog zu der "Phasen-Box" können andere Kantenlängen bzw. unterschiedliche Größen der Sub-Sub-Ansteuermuster vorteilhaft sein. Ebenso analog zur "Phasen-Box" lassen sich durch Änderungen der Amplitudenstärke, durch ein entsprechendes Element in mindestens einer der Sub-Sub-Nullstellen-Ansteuermuster, die Positionen der Nullstellen sub-pixel-genau platzieren. Soll in dem angeführten Beispiel die Nullstellen-Position unabhängig voneinander veränderbar sein, so könnte man beispielsweise in den zwei nicht aneinander angrenzenden Bereichen des Sub-Nullstellen-Ansteuermusters unabhängig steuerbare Elemente zur Änderung der Amplitudenstärke, wie zum Beispiel eine Fresnel-Linse oder ein periodisches Muster, hinzufügen. Alle weiteren Überlegungen zur Erzeugung und Optimierung der Erzeugung einer Nullstelle gelten zur Erzeugung mehrerer Nullstellen mit einem Sub-Nullstellen-Ansteuermuster analog.

Es ist auch möglich die Position mehrerer Emitter aus mehreren Messungen mit verschobenen und relativ zu einander gedrehten 1D Nullstellenmustern in 2D in Analogie zu tomographischen Methoden (wie z.B. bei Computertomographie) zu bestimmen. Analoges gilt für 3D Positions-Bestimmungen z.B. mit 2D Nullstellen oder aber auch 1D Nullstellen.

In einer weiteren besonders vorteilhaften Ausgestaltung kann eine Nullstelle auch wie folgt sub-pixel-genau verschoben werden:
Eine Phasen-Box A mit einem Phasenunterschied von π zwischen aneinander angrenzenden rechteckigen Bereichen wird mit dem Modulator pixelgenau an einer Stelle positioniert. Wird diese Phasen-Box A in der Ebene um einen Pixel entlang oder entgegen der Normalen der Phasengrenze verschoben, entsteht eine zweite Phasen-Box B, in der ebenfalls zwei rechteckige Bereiche mit einem Phasenunterschied von π aneinander angrenzen. Somit wird sich auch (bei Vernachlässigung des Einflusses anderer Phasen-Boxen) die Nullstelle unter Berücksichtigung des Abbildungsmaßstabes entsprechend verschieben.

Um nun ein Nullstellen-Ansteuermuster zu erzeugen, dessen Nullstellenposition zwischen den durch die Phasen-Boxen A und B vorgegebenen "Extremen" liegt, kann nun ein Mittel aus den Phasen-Boxen A und B gebildet werden, in dem diese beiden Phasen-Boxen A und B mit einer Konstanten W relativ zueinander gewichtet sind.

In den Bereichen, wo beide Phasen-Boxen A und B die Phase 0 bzw. π haben, hat auch dieses neue Nullstellen-Ansteuermuster die entsprechende Phase 0 bzw. π. In der ein Pixel breiten Überlappregion in der Mitte verschiebt sich die Phase durch das gewichtete Mitteln entsprechend dem Wert der Konstanten W um einen Wert zwischen 0 und π. In den beiden jeweils ein Pixel breiten Randbereichen ergibt sich jeweils eine Mischung aus dem jeweiligen Ansteuermuster der Phasen-Box und dem Hintergrund, der beispielsweise mit dem Blockier-Ansteuermuster belegt sein kann.

Das sich insgesamt ergebende Muster führt zunächst einmal zu einer Verschlechterung der Nullstellenqualität. Für ein konkret vorgegebenes W kann die Nullstellenqualität jedoch wiederhergestellt werden. Hierzu wird der Bereich des Musters, in dem sich die Phase um 0 ändert, mit einer ersten Zusatzphase versehen. Analog wird der Bereich des Musters, in dem sich die Phase um π ändert, mit einer zweiten Zusatzphase versehen. Die beiden Zusatzphasen können nun so optimiert werden, dass die Beleuchtungsstärke in der Nullstelle, deren Position durch W vorgegeben ist, ein möglichst kleines Minimum erreicht. Hierbei kann insbesondere beispielsweise die zweite Zusatzphase durch Negieren der ersten Zusatzphase erhalten werden. Die zweite Zusatzphase kann aber auch unabhängig von der ersten Zusatzphase optimiert werden, was die Nullstellenqualität weiter verbessert.

Die Abhängigkeit der ersten Zusatzphase, bzw. der zweiten Zusatzphase, von W lässt sich durch einen Algorithmus numerisch ermitteln, tabellieren und ggfs. nähern. Sie lässt sich auch theoretisch berechnen. Wenn die Zusatzphasen festgelegt sind, lässt sich die von W abhängige Position der Nullstelle ebenfalls durch Algorithmus (bzw. Theorie) ermitteln, tabellieren und nähern. Die genannten Abhängigkeiten lassen sich invertieren, so dass sich dann ausgehend von einer gewünschten Sub-Pixel-Nullstellenposition der Wert von W sowie die Werte der Zusatzphasen ermitteln lassen. Damit ist dann das um die Zusatzphasen korrigierte gewichtete Phasen-Box-Ansteuermuster klar beschrieben und definiert.

In einer besonders vorteilhaften Ausgestaltung wird ein parametrisierter Ansatz für das Nullstellen-Ansteuermuster aufgestellt. Die Parameter dieses Ansatzes werden optimiert mit dem Ziel, dass die Summe der Amplitudenverteilungen an den mindestens zwei vorgegebenen Positionen Nullstellen aufweist. Auf diese Weise kann die Suche insbesondere nach Nullstellen-Ansteuermustern, die nicht lediglich aus vorgefertigten "Phasen-Boxen" bestehen, deutlich beschleunigt werden. Die Parameter können z.B. die zu findenden Phasenwerte innerhalb einer zur Verfügung stehenden Ansteuerregion auf einem Lichtmodulator sein. Sie können sich aber auch auf andere Werte (z.B. deutlich weniger Werte, wie Offsetphase, Blazewinkel und Modulationstiefe) beziehen, aus denen man dann die entsprechenden Ansteuermuster ermitteln kann.

In einer weiteren besonders vorteilhaften Ausgestaltung wird der Modulator mit einer Überlagerung aus einem Blockier-Ansteuermuster und dem Nullstellen-Ansteuermuster angesteuert. Das Blockier-Ansteuermuster wird benutzt, um das über den Modulator geführte Licht im Wesentlichen aus dem Arbeitsbereich fernzuhalten. Das Lichtfeld hat dann im Arbeitsbereich nur in der unmittelbaren Umgebung der Nullstellen eine nennenswerte Intensität. Auf diese Weise kann die Lichtdosis, mit der der Arbeitsbereich insgesamt beaufschlagt wird, begrenzt werden. Auf diese Weise kann insbesondere beispielsweise eine phototoxische Gesamtbelastung einer empfindlichen Probe, die den Arbeitsbereich bildet, vermindert werden.

Dieses Blockier-Ansteuermuster kann insbesondere beispielsweise ein hochfrequentes Gitter sein, welches benutzt wird, um das über den Modulator geführte Licht im Wesentlichen aus dem Arbeitsbereich fernzuhalten. Die Wirkungsweise ist analog zu dem beschriebenen Beispiel beim Überlagen der Phasen-Box mit einem zusätzlichen Gitter. Da das angelegte Blockier-Muster im Sinne einer Schlierenoptik so hochfrequent gewählt worden ist, kann es von einem entsprechenden Tiefpassfilter geblockt werden. Die Tiefpassfilterung kann insbesondere beispielsweise durch eine Aperturblende bzw. eine Fourier-Maske in einer Fourierebene zwischen Modulator und Arbeitsbereich realisiert werden. Anteile des Lichtfeldes mit hohen Frequenzen werden damit unterdrückt. Hohe Frequenzen weist das Lichtfeld in dieser Ausführung im Wesentlichen in den jeweiligen Umgebungen der Nullstellen und in den Bereichen des Blockier-Ansteuermusters auf.

Von Vorteil kann es sein, die Ränder mindestens eines Nullstellen-Ansteuermusters, Sub-Nullstellen-Ansteuermusters oder Sub-Sub-Nullstellen-Ansteuermusters als weichen Übergang zum angrenzenden Blockier-Muster zu gestalten. Hiermit können ungewollte Randerscheinungen, welche zur Verschlechterung der Nullstelle führen könnten, minimiert werden.

Als Fourier-Maske kann vorteilhaft eine Ringapertur (Bandpassfilter) gewählt werden. Damit können Reflexionen, wie etwa nicht modulierte Reflexe vom Modulator, gebockt werden. Dies trägt dazu bei, eine höhere Nullstellenqualität zu erreichen.

Der Modulator kann auch beispielsweise unter einem schrägen Winkel derart beleuchtet und so angesteuert werden, dass Lichtanteile, deren Phase nicht durch ein Sub-Nullstellen-Ansteuermuster geändert wird, im Wesentlichen aus dem Arbeitsbereich (z.B. durch eine Blende oder die Aperturbegrenzung) ferngehalten werden. Auch auf diese Weise kann die phototoxische Belastung des Arbeitsbereichs vermindert werden. Die Phasen-Boxen enthalten dann ein Gitter (z.B. mit Blaze), das so beschaffen ist, dass von dort Licht in den Arbeitsbereich gelangt.

In einer weiteren besonders vorteilhaften Ausgestaltung wird das Licht in mehreren unterschiedlichen optischen Ebenen moduliert. Hierzu können beispielsweise mehrere Modulatoren verwendet werden. Es können auch beispielsweise mindestens zwei Teile eines Modulators in unterschiedlichen optischen Ebenen in Kombination mit mindestens einem zusätzlichen optischen Element verwendet werden. Die Modulatoren bzw. Teile von Modulatoren können dann arbeitsteilig zusammenwirken, wie dies bereits zuvor erläutert wurde.

In einer weiteren besonders vorteilhaften Ausgestaltung wird eine optische Ebene, in der der Modulator angeordnet ist, mit einem optischen System verkleinernd auf den Arbeitsbereich oder auf eine andere optische Ebene abgebildet. Bei gegebener Ortsauflösung der auf der aktiven Fläche des Modulators ansteuerbaren Pixel wird dann eine Positionierung von Nullstellen im Arbeitsbereich mit einer höheren Genauigkeit ermöglicht. Das abbildende optische System kann weiterhin beispielsweise das Lichtfeld in einer Weise in den Arbeitsbereich führen, dass aus dem Arbeitsbereich als Folge einer Anregung durch das Lichtfeld emittiertes Sekundärlicht nicht von dem Modulator abgeschattet wird, sondern zu einem Detektor geleitet werden kann.

In einer weiteren besonders vorteilhaften Ausgestaltung werden der Arbeitsbereich und der Modulator an optisch zueinander konjugierten Positionen, und/oder in optisch zueinander konjugierten Ebenen, angeordnet werden. "Konjugiert" bedeutet in diesem Zusammenhang insbesondere, dass ein optisches System scharfe Abbildungen zwischen den betroffenen (konjugierten) Positionen/ Ebenen vermittelt.

Auf diese Weise ist der Zusammenhang zwischen den Positionen der Nullstellen im Arbeitsbereich einerseits und den zur Erzeugung dieser Nullstellen nötigen Änderungen der Phase durch den Modulator andererseits besser handhabbar.

Es kann aber auch beispielsweise der Modulator in einer Fourierebene platziert werden. Die Lage der Fourierebene wird durch das konkret verwendete optische System festgelegt. Durch Platzieren des Modulators in die Fourierebene, können Änderungen der Phase durch den Modulator im Ortsfrequenzraum eingebracht werden. Die Änderungen können beispielsweise durch Fouriertransformation der gewünschten räumlichen Verteilung von Nullstellen im Arbeitsbereich, oder auch beispielsweise mit iterativen Algorithmen (wie etwa dem Gerchberg-Saxton-Algorithmus oder Algorithmen, die z.B. Gradienten-basiert ein Optimum finden), ermittelt werden.

Die Platzierung in der Fourierebene hat den Vorteil, dass so die insgesamt zur Verfügung stehende Intensität besser genutzt werden kann.

Auch ein Modulator, der sich weder in der Bildebene noch in der Fourierebene befindet, kann von Vorteil sein. So kann dann beispielsweise bei einem phasenändernden Modulator die zur Verfügung stehende Intensität des Lichtfelds durch eine virtuelle Verschiebung des Modulators zurück in die Bildebene, mittels der Einbeziehung von zusätzlichen Fokus-Termen, noch besser genutzt werden. Dabei steigert sich der Rechenaufwand für die Nullstellen-Ansteuermuster nur gering, da keine zeitintensiven iterativen Algorithmen zur Erzeugung der Nullstellen-Ansteuermuster insbesondere während der Anwendung der Muster notwendig sind.

Die Verwendung einer statischen Phasenmaske in Kombination mit Nullstellen-Ansteuermustern kann sinnvoll sein, um einen "Generalized Phase Contrast" zu erzeugen. Ein "Generalized Phase Contrast" entsteht durch Anwendung einer Phasenmaske in der Fourier-Ebene.

Besonders vorteilhaft können zwei Modulatoren, oder auch zwei Teile desselben Modulators, in Bezug auf das abbildende optische System in verschiedenen optischen Ebenen angeordnet sein. Es kann dann beispielsweise der eine Modulator, bzw. der eine Teil des Modulators, die Aufgabe übernehmen, lokale Intensitätsmaxima in der Nähe der gewünschten Positionen der Nullstellen zu schaffen. Der andere Modulator kann dann beispielsweise die Aufgabe übernehmen, die Nullstellen mit Sub-Pixel-Genauigkeit auf die gewünschten Positionen zu bringen und die Qualität der Nullstellen zu optimieren. Ein Vorteil dieser Anordnung ist eine sehr hohe Lichteffizienz und die Möglichkeit die Krümmung der Intensitätsverteilung in der Nähe der Nullstelle, die letztlich mit der Intensität in der Nähe der Nullstelle zusammenhängt, individuell kontrollieren zu können.

Eine weitere Ausführungsvariante liegt darin, zwei oder mehrere Modulatoren, bzw. zwei oder mehrere Teile eines oder mehreren Modulators, die in Bezug auf das abbildende optische System in verschiedenen optischen Ebenen angeordnet sind, so zu nutzen, dass eine erste Anzahl an Modulatoren (bzw. Teilen) das Licht von der Lichtquelle vorfokussiert, beispielsweise in verschiedenen Teilstrahlen. Die restliche Anzahl der Modulatoren (bzw. Teile) kann dann das vorfokussierte Licht verwenden, um die Nullstellen zu erzeugen, die dann von stärkeren Intensitätsmaxima begrenzt sind.

Wie zuvor erläutert, ist eine Hauptanwendung einer beliebig positionierbaren Anordnung mehrerer Nullstellen eines Lichtfeldes in einem Arbeitsbereich die Arbeit mit Punktemittern in diesem Arbeitsbereich. Daher bezieht sich die Erfindung auch auf ein Verfahren zum Beaufschlagen eines Arbeitsbereichs, der Punktemitter enthält, mit einem Lichtfeld, das das Anregen, Lokalisieren, Verfolgen oder sonstige Arbeiten mit diesen Punktemittern ermöglicht.

Im Rahmen dieses Verfahrens werden mindestens zwei Positionen, an denen sich die Punktemitter im Arbeitsbereich befinden, zumindest näherungsweise beschafft. Dies kann insbesondere beispielsweise durch eine vorangegangene Aktivierung und Lokalisierung von Punktemittern erfolgen, zum Beispiel über einen modellbasierten Fit der jeweils emittierten Intensitätsverteilung. Der Arbeitsbereich wird dann mit dem zuvor beschriebenen Verfahren mit einem Lichtfeld beaufschlagt, das an den zuvor beschafften Positionen Nullstellen aufweist. In einer besonders günstigen Ausgestaltung liegen die Punktemitter vereinzelt - also optisch isoliert vor. Falls die optische Isolation der Punktemitter nicht vorliegt, können beispielsweise die Positionen der Punktemitter durch Sub-Nullstellen-Ansteuermuster trotzdem noch gewonnen werden, mit denen man mehrere Nullstellen innerhalb des Mindestabstands zum Vorliegen einer optischen Isolation der Punktemitter erzeugen kann. Auch können ausreichend viele Messungen mit Verschiebung der Nullstellen die nötige Information liefern. Dabei kann es insbesondere sinnvoll sein, auch die Bildinformation mit zu nutzen.

Wie zuvor erläutert, können die zunächst nur näherungsweise beschafften Positionen der Punktemitter durch die Möglichkeit, die Positionen der Nullstellen auch mit Sub-Pixel-Genauigkeit im Arbeitsbereich zu verschieben, im Nachhinein optimiert werden. Sind dann die genauen Positionen der Punktemitter gefunden, können die Punktemitter unabhängig voneinander auf ihrem Weg durch den Arbeitsbereich verfolgt werden. Die iterative Optimierung ist besonders einfach, wenn man für die Zeit der Optimierung annehmen kann, dass die Emitter sich nicht oder nur sehr wenig bewegen. Eine Optimierung kann aber auch die mögliche Bewegung der Emitter während der Optimierung mit im Modell berücksichtigen.

Daher wird in einer besonders vorteilhaften Ausgestaltung die Intensität (und ggf. dessen örtliche Verteilung) von Sekundärlicht, das von den Punktemittern in Antwort auf eine Anregung mit dem Lichtfeld emittiert wird, gemessen. Auf diese Weise kann beispielsweise studiert werden, wie gut sich die Punktemitter durch das Lichtfeld zur Zeit anregen lassen. Das Sekundärlicht kann auch zusätzlich genutzt werden, um die Punktemitter zu lokalisieren sowie ihre Bewegung zu verfolgen.

Die Positionen, an denen sich die Nullstellen des Lichtfeldes befinden, können in einer weiteren besonders vorteilhaften Ausgestaltung aktiv geregelt werden, so dass die Intensität des Sekundärlichts ein Minimum annimmt oder sich das Minimum gewollt in deren unmittelbarer Nähe befindet, so dass aus den emittiertem Licht sehr genau Distanzinformation zur Nullstelle erhalten werden kann.

Hierzu können die Positionen der Nullstellen insbesondere, wie zuvor beschrieben, subpixelgenau verschoben werden. Dabei kann allgemein die Rate der jeweils detektierten Photonen pro Zeiteinheit abhängig von der Verschiebung erfasst werden. Je näher die Nullstelle sich beim Emitter befindet, desto genauer kann, bei vorgegebener Beleuchtungsdosis, letztendlich jeder Punktemitter lokalisiert werden.

Eine weitere Möglichkeit besteht darin, mindestens zwei Nullstellen zunächst subpixelgenau an jeweils einem Aufpunkt (angenommene Position des Punktemitters) zu positionieren und diese an mindestens drei Punkten um eine feste Distanz vom Aufpunkt mit möglichst isotropem relativem Winkelabstand (z.B. drei Schritte mit 120° relativer Rotation um das Rotationszentrum) zu verschieben. Aus der Anzahl der registrierten Photonen bei den einzelnen Messpunkten kann dann die Position des Punktemitters gefittet werden.

Die Wahl einer zirkulären Polarisation zur Beleuchtung des Arbeitsbereichs kann sinnvoll sein, um eine Abhängigkeit von der Orientierung des Moleküls oder genauer des Übergangsdipolmoments der Moleküle klein zu halten.

Auch eine Kombination der beiden Verfahren ist sinnvoll. So können etwa die Beträge, um die die Nullstelle ausgehend vom Aufpunkt verschoben wird, progressiv reduziert werden. Die Position des Punktemitters kann dann beispielsweise mit einer Maximum-Likelihood-Abschätzung gefittet werden.

Auch kann das Verfahren zum Bestimmen der Nullstellen so gewählt werden, dass in jedem Schritt die Nullstellen iterativ so neu positioniert werden, dass das Ergebnis der Messung (Anzahl bzw. Bild der Emittierten Photonen) jeweils maximal Information ("Information capacity") in Bezug auf die Bestimmung der Emitterposition liefert, was zu einer besonders effizienten Bestimmung der Emitterposition führt.

In einer weiteren besonders vorteilhaften Ausgestaltung wird der Arbeitsbereich mit mehreren Lichtfeldern beaufschlagt, die jeweils an verschiedenen Positionen Nullstellen aufweisen. Für jedes dieser Lichtfelder wird die Intensität des Sekundärlichts, und/oder die räumliche Verteilung dieser Intensität, gemessen. Aus den Messungen wird die Position mindestens eines Punktemitters im Arbeitsbereich ausgewertet. Wenn beispielsweise mindestens drei Lichtfelder gewählt werden und die Nullstellen von einem Lichtfeld zum anderen jeweils in einer Ebene verschoben sind, kann eine zweidimensionale Position mindestens eines Punktemitters aus den Messungen ausgewertet werden. Die Auswertung kann insbesondere beispielsweise einen Fit, etwa nach der Maximum-Likelihood-Methode, beinhalten.

In einer weiteren besonders vorteilhaften Ausgestaltung werden mindestens vier Lichtfelder gewählt. Dabei erstreckt sich die Vereinigungsmenge der Positionen von Nullstellen aus allen Lichtfeldern über die Raumrichtungen. Die Auswertung, die wiederum beispielsweise einen Fit beinhalten kann, kann dann die dreidimensionale Position mindestens eines Punktemitters liefern.

In einer weiteren besonders vorteilhaften Ausgestaltung wird der Arbeitsbereich zunächst mit einem ersten Lichtfeld beaufschlagt, und die Intensität des Sekundärlichts, und/oder die räumliche Verteilung dieser Intensität, wird gemessen.

Nach dieser Messung wird ein zweites Lichtfeld ermittelt, welches einen maximalen Informationsgewinn im Hinblick auf ein vorgegebenes Ziel verspricht. Dieses vorgegebene Ziel kann beispielsweise die genaue Lokalisierung mindestens eines Punktemitters beinhalten. Das erste Lichtfeld und das zweite Lichtfeld unterscheiden sich insbesondere hinsichtlich der Positionen der in ihnen enthaltenen Nullstellen. Der Arbeitsbereich wird anschließend mit dem zweiten Lichtfeld beaufschlagt, und wiederum wird die Intensität, bzw. die räumliche Verteilung der Intensität, gemessen.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Verfahrens 100;
Figur 2: Erzeugung von Nullstellen 7a, 7b durch Phasenänderungen Δϕₐ, Δϕ_{b};
Figur 3: Überlagerung eines Blockier-Ansteuermusters 6e mit Nullstellen-Ansteuermuster 6 aus mehreren Sub-Nullstellen-Ansteuermustern 60;
Figur 4: Beispielhafte Nullstellen-Ansteuermuster 6a und 6b mit Sub-Nullstellen-Ansteuermustern 60a, 60b, die wiederum Sub-Sub.Ansteuermuster 6a1, 6a2 bzw. 6b1, 6b2 beinhalten;
Figur 5: Veranschaulichung des Verschiebens einer Nullstelle 7a durch Änderung eines Sub-Sub-Ansteuermusters 6b1, 6b2;
Figur 6: Veranschaulichung des Verschiebens zweier Nullstellen durch Änderung von Sub-Sub-Ansteuermustern 6b2, 6b3;
Figur 7: Ausführungsbeispiel des Verfahrens 200;
Figur 8: Beispielhafte Vorrichtung zur Durchführung des Verfahrens 200.

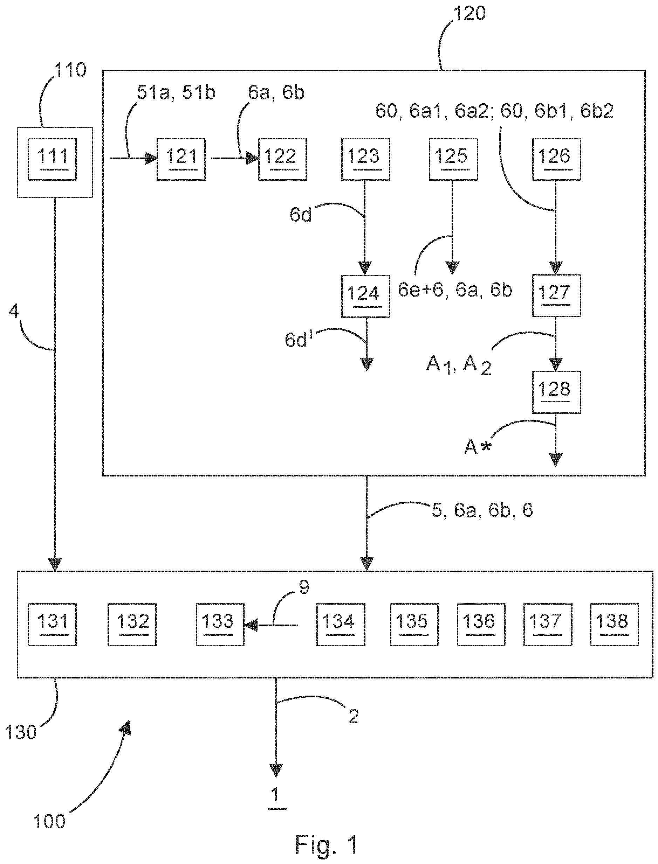

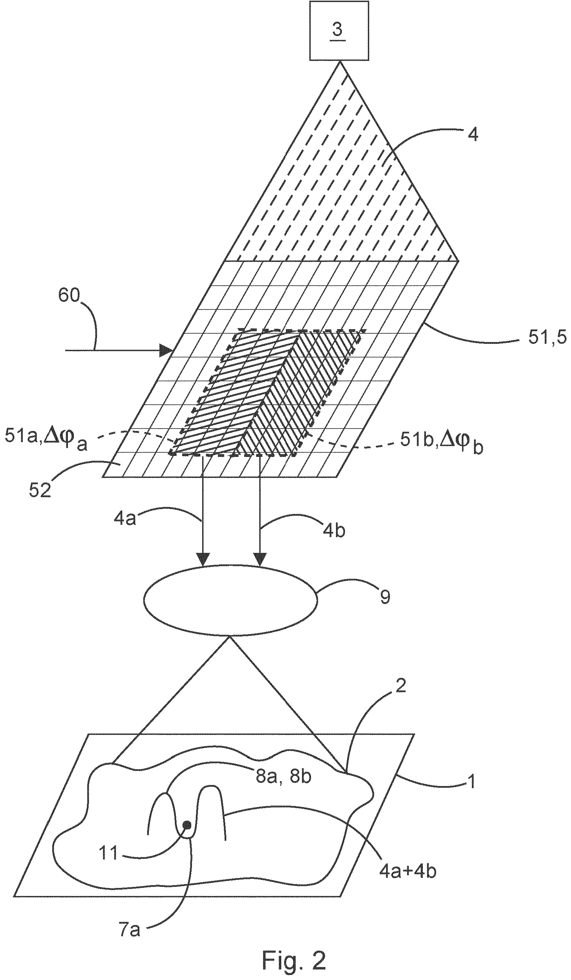

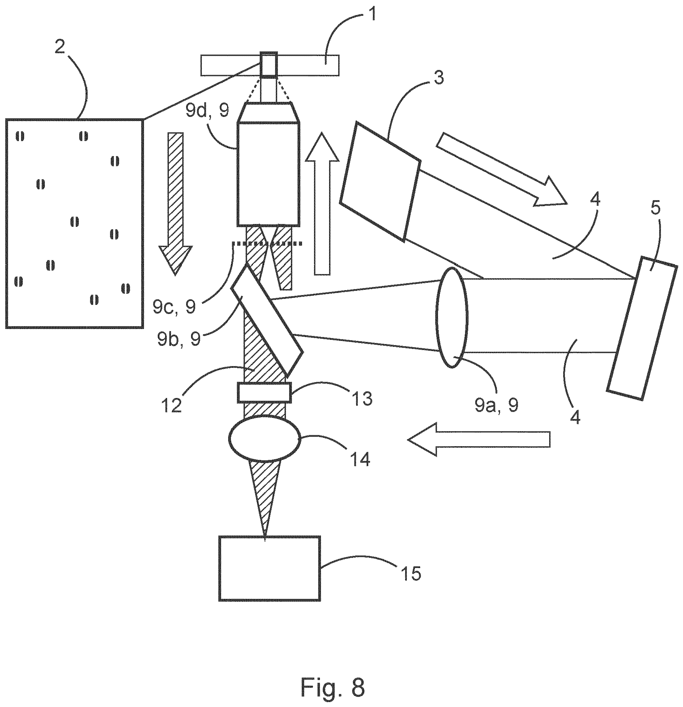

Figur 1 ist ein schematisches Ablaufdiagramm eines Ausführungsbeispiels des Verfahrens 100 zum Erzeugen eines Lichtfeldes 2 in einem vorgegebenen Arbeitsbereich 1. In Schritt 110 wird Licht 4 aus einer Lichtquelle 3 mindestens einem Modulator 5 zugeführt. Dieser Modulator 5 kann gemäß Block 111 eine ansteuerbare aktive Fläche 51 aufweisen, die Lichtanteilen 4a, 4b des Lichts 4 Phasenänderungen Δϕₐ, Δϕ_{b} aufprägt. Die Wirkung des Modulators 5 ist im Einzelnen in Figur 2 dargestellt. Der gesamte optische Aufbau ist in Figur 8 näher dargestellt.

In Schritt 120 wird der Modulator 5 mit einem Nullstellen-Ansteuermuster 6, 6a, 6b angesteuert dergestalt, dass die Summe der Amplitudenverteilungen der über den Modulator 5 geführten Lichtanteile 4a, 4b in dem Arbeitsbereich 1 an mindestens zwei vorgegebenen Positionen Nullstellen 7a, 7b aufweist. Dabei grenzen diese Nullstellen jeweils an Bereiche 8a, 8b an, in denen diese Summe der Amplitudenverteilungen von Null verschieden ist. Dies ist ebenfalls in Figur 2 näher dargestellt.

In Schritt 130 wird das Licht 4 vom Modulator 5 in den Arbeitsbereich 1 geführt und bildet dort das Lichtfeld 2.

Innerhalb des Kastens 120 sind mehrere beispielhafte Ausgestaltungen für das Ansteuern des Modulators 5 angegeben.

Gemäß Block 121 können aneinander angrenzende Bereiche 51a, 51b der aktiven Fläche 51 des Modulators 5, die zu Sub-Sub-Ansteuermustern 6a1, 6a2; 6b1, 6b2 korrespondieren können, so angesteuert werden, dass zwischen Lichtanteilen 4a, 4b, auf die diese Bereiche 51a, 51b jeweils wirken, eine mittlere Phasenverschiebung von π für das diese Bereiche 51a, 51b verlassende Licht eingestellt wird. Die Sub-Nullstellen-Ansteuermuster, zusammengesetzt aus Sub-Sub-Ansteuermustern, werden in einer speziellen Ausgestaltungsform als "Phasen-Boxen" bezeichnet. Deren Wirkung ist in Figur 2 näher erläutert.

Gemäß Block 122 wird der Modulator 5 zu einem ersten Zeitpunkt mit einem ersten Nullstellen-Ansteuermuster 6a, beispielsweise bestehend aus mindestens zwei (möglicherweise verschiedenen ausgestalteten) Sub-Nullstellen-Ansteuermustern 60, und zu einem zweiten, späteren Zeitpunkt mit mindestens einem zweiten Nullstellen-Ansteuermuster 6b, beispielsweise bestehend aus mindestens zwei (möglicherweise verschieden ausgestalteten) Sub-Nullstellen-Ansteuermustern 60, angesteuert. Dabei unterscheiden sich mindestens zwei Nullstellen-Ansteuermuster 6a, 6b dahingehend, dass sich die Position mindestens einer Nullstelle 7a, 7b im Arbeitsbereich 1 um einen geringeren Betrag ändert als sich durch die Translation des ersten Nullstellen-Ansteuermusters 6a auf einer in Pixel 52 unterteilten aktiven Fläche 51 des Modulators 5 um ein Pixel 52 ergeben würde. Die Nullstelle 7a, 7b lässt sich also im Arbeitsbereich 1 um Sub-Pixel-Beträge verschieben. Eine beispielhafte Unterteilung der aktiven Fläche 51 in Pixel 52 ist in Figur 2 gezeigt.

Gemäß Block 123 kann ein parametrisierter Ansatz 6d für das Nullstellen-Ansteuermuster 6 aufgestellt werden. Gemäß Block 124 können die Parameter 6d' des Ansatzes 6d optimiert werden mit dem Ziel, dass die Nullstellen 7a, 7b sich genau an den gewünschten Positionen befinden.

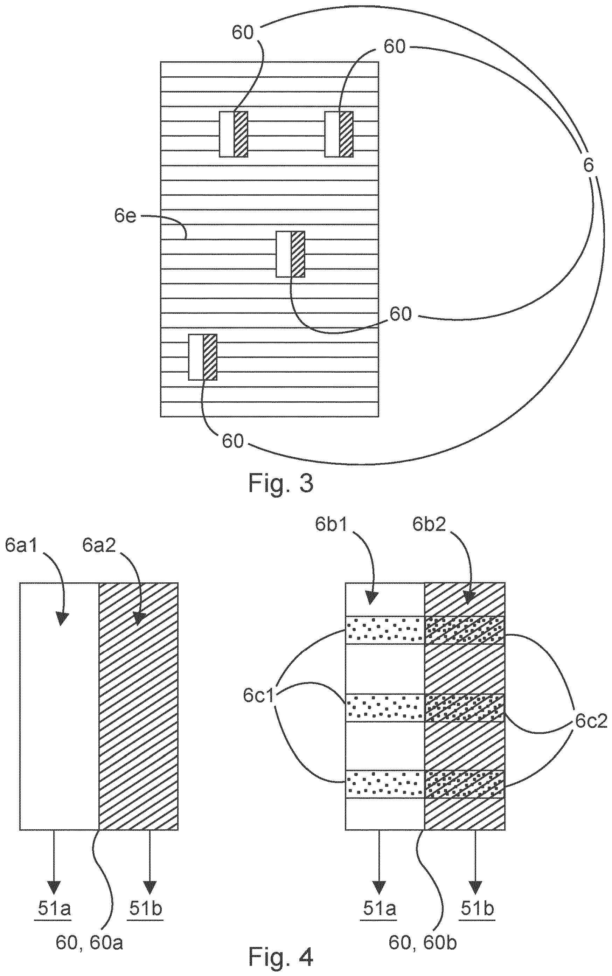

Gemäß Block 125 kann der Modulator mit einer Überlagerung aus dem Nullstellen-Ansteuermuster 6, 6a, 6b einerseits und einem Blockier-Ansteuermuster 6e andererseits angesteuert werden. Das Blockier-Ansteuermuster 6e allein würde im Wesentlichen das gesamte über den Modulator 5 geführte Licht 4 vom Arbeitsbereich 1 fernhalten; diese Blockade wird an den Stellen, an denen das Nullstellen-Ansteuermuster 6, 6a, 6b wirkt, durchbrochen. Die Überlagerung gemäß Block 125 ist in Figur 3 skizziert.

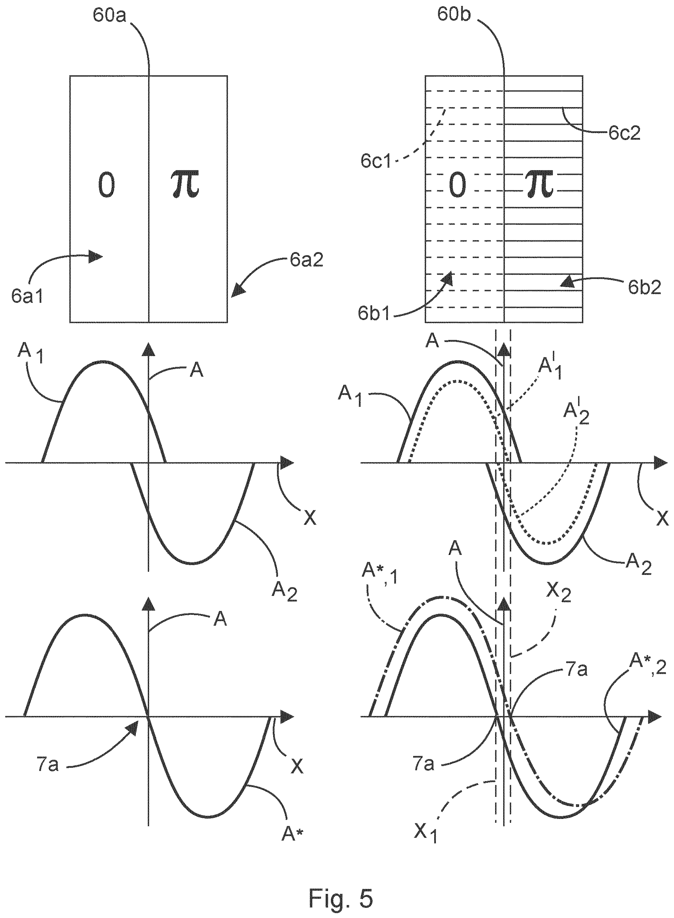

Gemäß Block 126 kann mindestens ein Sub-Nullstellen-Ansteuermuster 60 aus mindestens zwei Sub-Sub-Ansteuermustern 6a1, 6a2 bzw. 6b1, 6b2 überlagert oder in anderer Weise zusammengesetzt sein. Das Licht, das durch jedes dieser Sub-Sub-Ansteuermuster 6a1, 6a2 bzw. 6b1, 6b2 beeinflusst wird, erzeugt dann gemäß Block 127 am vorgegebenen Ort mindestens einer Nullstelle 7a, 7b jeweils eine komplexe Amplitude A₁, A₂. Dabei sind die Sub-Sub-Ansteuermuster 6a1, 6a2 bzw. 6b1, 6b2 gemäß Block 128 so gewählt, dass die Überlagerung A* dieser komplexen Amplituden A₁, A₂ am vorgegebenen Ort der Nullstelle 7a, 7b Null (bzw. nahezu Null) ergibt. Dies ist im Detail in Figur 5 näher dargestellt. Das Bezugszeichen A* soll hier nicht als "komplexe Konjugation" im mathematischen Sinne missverstanden werden.

Innerhalb des Kastens 130 sind verschiedene Ausgestaltungen angegeben dahingehend, wie das Licht 4 im Einzelnen vom Modulator 5 in den Arbeitsbereich 1 geführt werden kann, um dort das Lichtfeld 2 zu bilden.

Gemäß Block 131 kann das Licht zwischen dem Modulator 5 und dem Arbeitsbereich 1 im Ortsfrequenzraum tiefpassgefiltert werden.

Gemäß Block 132 kann der Modulator 5 von der Lichtquelle 3 in einem schrägen Winkel beleuchtet und so angesteuert werden, dass Lichtanteile 4, deren Phase nicht durch ein Nullstellen-Ansteuermuster 6, 6a, 6b geändert wird, im Wesentlichen aus dem Arbeitsbereich 1 ferngehalten werden.

Gemäß Block 133 kann eine optische Ebene, in der der Modulator angeordnet ist, mit einem optischen System 9 verkleinernd auf den Arbeitsbereich 1 oder auf eine andere optische Ebene abgebildet werden.

Gemäß Block 134 können der Arbeitsbereich 1 und der Modulator 5 an optisch zueinander konjugierten Positionen, und/oder in optisch zueinander konjugierten Ebenen, angeordnet werden.

Gemäß Block 135 kann der Modulator 5 in einer Fourier-Ebene angeordnet werden.

Gemäß Block 136 kann der Modulator 5 in einer beliebigen optischen Ebene angeordnet werden.

Gemäß Block 137 können zusätzliche Modulatoren (5) und/oder mindestens zwei Teile eines Modulators in unterschiedlichen optischen Ebenen, verwendet werden.

Gemäß Block 138 können ein oder mehrere Modulatoren und/oder mindestens zwei Teile eines Modulators in unterschiedlichen optischen Ebenen in Kombination mit mindestens einem zusätzlichen optischen Element, verwendet werden.

Figur 2 verdeutlicht die Erzeugung einer Nullstelle 7a, 7b mittels einem Sub-Nullstellen-Ansteuermuster 60 mit dem Modulator 5 anhand eines vereinfacht skizzierten Aufbaus. Der Aufbau ist der Übersichtlichkeit halber in Transmission gezeichnet, wenngleich am Markt erhältliche Modulatoren 5, die in Reflexion betrieben werden, typischerweise bessere Ergebnisse liefern.

Eine Lichtquelle 3 strahlt Licht 4 auf den Modulator 5. Die aktive Fläche 51 des Modulators 5 ist in Pixel 52 unterteilt, die einzeln ansteuerbar sind und dem auf das jeweilige Pixel 52 einfallenden Licht je nach Ansteuerung eine bestimmte Phasenänderung Δϕ aufprägen. In dem in Figur 2 gezeigten Zustand wird der Modulator 5 mit dem Sub-Nullstellen-Ansteuermuster 60 angesteuert, das auf der aktiven Fläche 51 zwei aneinander angrenzende Bereiche 51a und 51b entstehen. Zur Veranschaulichung ist in Figur 2 ein Sub-Nullstellen-Ansteuermuster 60 gezeigt, das nur eine einzelne Nullstelle 7a, 7b erzeugt.

Dem Lichtanteil 4a, der auf den Bereich 51a fällt, wird eine Phasenänderung Δϕₐ aufgeprägt. Dem Lichtanteil 4b, der auf den Bereich 51b fällt, wird eine Phasenänderung Δϕ_{b} aufgeprägt. Die Phasenänderungen Δϕₐ und Δϕ_{b} unterscheiden sich um π. Der Übersichtlichkeit halber ist in Figur 2 nur eine Anordnung aus Bereichen 51a und 51b eingezeichnet.

Die Lichtanteile 4a und 4b werden vom Modulator 5 durch ein optisch abbildendes System 9 in den Arbeitsbereich 1 geführt, wo sie das Lichtfeld 2 bilden. Das hierfür in Figur 2 verwendete Symbol soll nicht dahingehend missverstanden werden, dass eine einzelne Linse im Allgemeinen als optisch abbildendes System 9 ausreicht. Jeder Bereich 51a und 51b erzeugt für sich genommen eine Amplitudenverteilung A₁ und A₂, mit einem an der gewünschten Nullstelle von Null verschiedenem Wert, aber dort mit jeweils gleichem Betrag und unterschiedlichem Vorzeichen, so dass sich in Summe dort eine Nullstelle ergibt. In dem Lichtfeld 2 bildet sich für jede Anordnung aus Bereichen 51a und 51b auf der aktiven Fläche 51 die Nullstelle 7a, die von einem Bereich 8a, 8b mit von Null verschiedener Intensität umgeben ist. Die bevorzugte Verwendung dieser Nullstellen ist das Lokalisieren und/oder Verfolgen von Punktemittern 11 im Arbeitsbereich 1.

Wie zuvor erwähnt, zeigt Figur 3 eine Überlagerung aus einem Blockier-Ansteuermuster 6e (hier ein regelmäßiges Gitter aus waagerechten Linien) und einem Nullstellen-Ansteuermuster 6. Das Nullstellen-Ansteuermuster 6 umfasst mehrere Sub-Nullstellen-Ansteuermuster 60 nach der Art des gemäß Figur 2 verwendeten Sub-Nullstellen-Ansteuermusters 60. Diese Überlagerung kann auf die aktive Fläche 51 des Modulators 5 geschaltet werden.

Figur 4 zeigt zwei beispielhafte Sub-Nullstellen-Ansteuermuster 60a und 60b, die zu zwei verschiedenen Nullstellen-Ansteuermustern 6a bzw. 6b gehören. Beide Sub-Nullstellen-Ansteuermuster 60a und 60b enthalten jeweils zwei Sub-Sub-Ansteuermuster 6a1 und 6a2, bzw. 6b1 und 6b2, die beispielsweise auf aneinander angrenzende Bereiche 51a und 51b auf der aktiven Fläche 51 des Modulators 5 geschaltet werden können.

In dem Sub-Nullstellen-Ansteuermuster 6a bewirkt das zweite Sub-Sub-Ansteuermuster 6a2 im Vergleich zum ersten Sub-Sub-Ansteuermuster 6a1 eine Phasenänderung des betroffenen Lichts um π. Das gemäß den beiden Sub-Sub-Ansteuermustern 6a1 und 6a2 modulierte Licht überlagert sich am Ort der Nullstelle 7a zu einer komplexen Amplitude von Null.

Das Sub-Nullstellen-Ansteuermuster 60b ist gegenüber dem Sub-Nullstellen-Ansteuermuster 60a dahingehend abgeändert, dass die beiden Sub-Sub-Ansteuermuster 6b 1 und 6b2 nun jeweils auch einen in der Ebene der aktiven Fläche 51 periodischen Anteil 6c1, 6c2 enthalten. Hierdurch werden die durch die Sub-Sub-Ansteuermuster 6b1 und 6b2 erzeugten Amplitudenstärken am vorgegebenen Ort der Nullstelle beeinflusst. In Figur 5 ist näher erläutert, wie auf diese Weise die Position einer Nullstelle 7a verschoben werden kann.

Figur 5 veranschaulicht schematisch, wie durch die Änderung der Amplitudenstärke mittels Sub-Sub-Ansteuermuster 6a1, 6a2; 6b1, 6b2 die Position einer Nullstelle 7a verschoben werden kann. Der Einfachheit halber ist hier nur eine Verschiebung entlang einer Koordinatenrichtung x gezeigt.

Unter dem bereits aus Figur 4 bekannten Sub-Nullstellen-Ansteuermuster 6a sind die komplexen Amplituden A₁ und A₂, die das durch die Sub-Sub-Ansteuermuster 6a1 und 6a2 jeweils beeinflusste Licht im Arbeitsbereich 1 erzeugt, als Funktion der Koordinate x aufgetragen. Die Überlagerung A* dieser komplexen Amplituden A₁ und A₂ hat eine Nullstelle 7a auf der A-Achse.

Unter dem ebenfalls bereits aus Figur 4 bekannten Sub-Nullstellen-Ansteuermuster 6b sind hierzu korrespondierende Diagramme gezeichnet. In dem in Figur 5 gezeigten Beispiel wird durch Hinzugabe des periodischen Anteils 6c2 des zweiten Sub-Sub-Nullstellen-Ansteuermusters 6b2 die komplexe Amplitude A₂ des Lichts, das durch das zweite Sub-Sub-Nullstellen-Ansteuermuster 6b2 beeinflusst wird, auf einen neuen Verlauf A'₂ abgeändert, der sich im Wesentlichen nur in der Stärke vom vorherigen Verlauf A₂ unterscheidet. Dementsprechend ändert sich auch die komplexe Amplitude A* der Überlagerung zu einem neuen Verlauf A*_{,1}=A₁+A₂', der die Nullstelle 7a nicht mehr auf der A-Achse hat, sondern an der neuen Position x₂.

Es kann aber auch beispielsweise an Stelle des periodischen Anteils 6c2 des zweiten Sub-Sub-Nullstellen-Ansteuermusters 6b2 der periodische Anteil 6c1 des ersten Sub-Sub-Nullstellen-Ansteuermusters 6b1 zugegeben werden. Wenn dies geschieht, wird die komplexe Amplitude A₁ des Lichts, das durch das erste Sub-Sub-Nullstellen-Ansteuermuster 6b 1 beeinflusst wird, auf einen neuen Verlauf A₁' abgeändert, der sich im Wesentlichen nur in der Stärke vom vorherigen Verlauf A₁ unterscheidet. Dies verschiebt die Nullstelle 7a des neuen Verlaufs A*_{,2}=A₁'+A₂ von der A-Achse nach links auf die neue Position x₁.

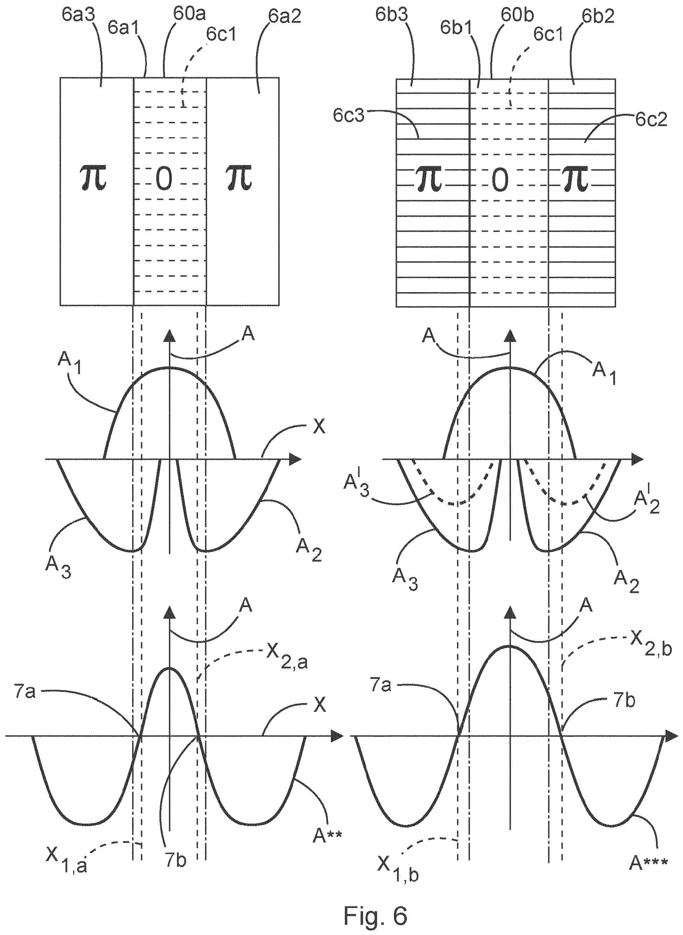

Figur 6 veranschaulicht schematisch, wie zwei Nullstellen 7a, 7b mit einem Sub-Nullstellen-Ansteuermuster 60a, 60b erzeugt werden können. Zusätzlich veranschaulicht Figur 6 schematisch, wie durch die Änderung der Amplitudenstärke mittels der Sub-Sub-Ansteuermuster 6a1, 6a2, 6a3; 6b1, 6b2,6b3 die Positionen zweier Nullstellen 7a, 7b verschoben werden können, welche mit einem Sub-Nullstellen-Ansteuermuster 60a, 60b erzeugt wurden. Der Einfachheit halber ist hier nur eine Verschiebung entlang einer Koordinatenrichtung x gezeigt.

Die in Figur 6 gezeigten Sub-Nullstellen-Ansteuermuster 60a, 60b unterscheiden sich von den in Figur 5 gezeigten Sub-Nullstellen-Ansteuermustern 60a, 60b dadurch, dass noch ein drittes Sub-Sub-Nullstellen-Ansteuermuster 6a3 bzw. 6b3 hinzugefügt wurde. Dementsprechend gibt es drei komplexe Amplituden A₁, A₂ und A₃, die sich zu einer resultierenden komplexen Amplitude A** überlagern.

Für das Sub-Nullstellen-Ansteuermuster 60a liegt die erste Nullstelle 7a an der Position x_{1,a}, wo A₁ überlagert mit A₃ Null bzw. nahezu Null ergibt. Die zweite Nullstelle 7b liegt an der Position x_{2,a}, wo A₁ überlagert mit A₂ Null bzw. nahezu Null ergibt.

Das Sub-Nullstellen-Ansteuermuster 60b unterscheidet sich vom Sub-Nullstellen-Ansteuermuster 60a nun dadurch, dass die Sub-Sub-Ansteuermuster 6b2 und 6b3 gleiche periodische Anteile 6c2 und 6c3 bekommen haben. Hierdurch wird die Amplitude A₂ zu einem Verlauf A₂' abgeändert, und die Amplitude A₃ wird zu einem Verlauf A₃' abgeändert. Es überlagern sich also die Amplituden A₁, A₂' und A₃' zur resultierenden komplexen Amplitude A***. Diese komplexe Amplitude A*** hat eine erste Nullstelle 7a an der Position x_{1,b}, wo A₁ überlagert mit A₃' Null bzw. nahezu Null ergibt, und eine zweite Nullstelle 7b an der Position x_{2,b}, wo A₁ überlagert A₂' Null bzw. nahezu Null ergibt.

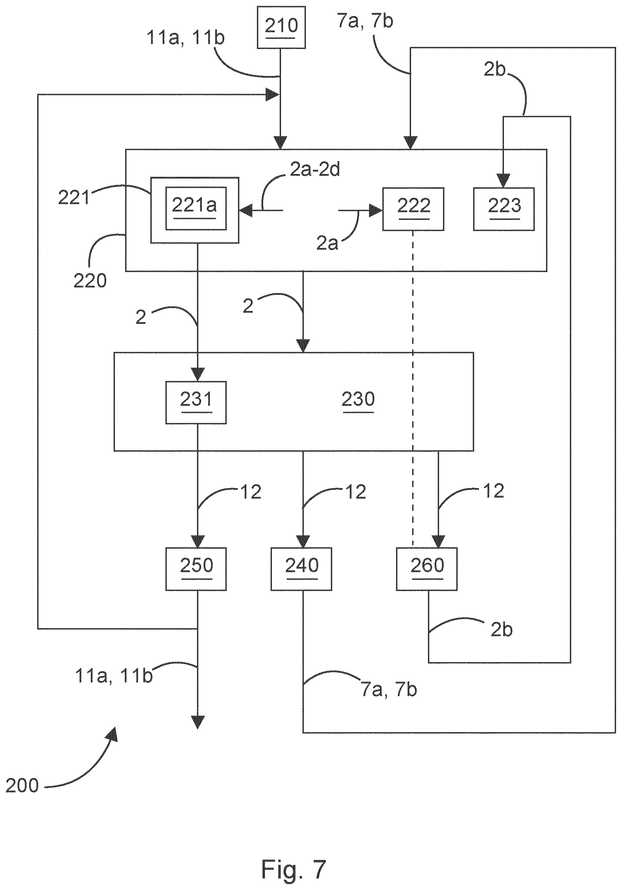

Figur 7 ist ein schematisches Ablaufdiagramm eines Ausführungsbeispiels des Verfahrens 200 zum Beaufschlagen eines Arbeitsbereichs 1, der Punktemitter 11 enthält, mit einem Lichtfeld 2. In Schritt 210 werden Positionen 11a, 11b, an denen sich die Punktemitter 11 befinden, mit einer beliebigen Methode zumindest näherungsweise beschafft. In Schritt 220 wird der Arbeitsbereich 1 mit dem zuvor beschriebenen Verfahren 100 mit einem Lichtfeld 2 beaufschlagt, das an den beschafften Positionen 11a, 11b Nullstellen 7a, 7b aufweist.

Das Lichtfeld 2 regt die Punktemitter 11 zur Emission von Sekundärlicht 12 an. Dieses Sekundärlicht wird in Schritt 230 gemessen. In Schritt 240 werden die Positionen, an denen sich die Nullstellen 7a, 7b des Lichtfeldes 2 befinden, aktiv geregelt, so dass die Intensität des Sekundärlichts 12 ein Minimum annimmt oder sich das Minimum gewollt in deren unmittelbarer Nähe befindet. Die Positionen der Nullstellen 7a, 7b dienen dann als Punktemitter-Positionen.

Gemäß Block 221 kann der Arbeitsbereich 1 mit mehreren Lichtfeldern 2a-2d beaufschlagt werden, die jeweils an verschiedenen Positionen Nullstellen aufweisen. Für jedes dieser Lichtfelder 2a-2d kann dann gemäß Block 231 die Intensität des Sekundärlichts, und/oder die räumliche Verteilung dieser Intensität, gemessen werden. Aus diesen Messungen kann in Schritt 250 die Position 11a, 11b mindestens eines Punktemitters 11 im Arbeitsbereich 1 ausgewertet werden. Sofern gemäß Block 221a mindestens vier Lichtfelder 2a-2d gewählt werden und sich die Vereinigungsmenge der Positionen von Nullstellen 7a, 7b aus allen Lichtfeldern über drei Raumrichtungen X, Y, Z erstreckt, kann die Position 11a, 11b des mindestens einen Punktemitters 11 auch dreidimensional bestimmt werden. Hiermit kann insbesondere der ursprünglich in Schritt 210 eingebrachte Näherungswert dieser Position 11a, 11b verfeinert werden. Die ermittelte Position 11a, 11b kann auch als neuer Näherungswert in das Verfahren 200 zurückgespielt werden, um den mindestens einen Punktemitter 11 kontinuierlich zu tracken.

Gemäß Block 222 kann der Arbeitsbereich 1 zunächst mit einem ersten Lichtfeld 2a beaufschlagt werden, und es kann nach der Messung 230 der Intensität des Sekundärlichts 12, und/oder der räumlichen Verteilung dieser Intensität, in Schritt 260 ein zweites Lichtfeld 2b ermittelt werden, welches einen maximalen Informationsgewinn im Hinblick auf ein vorgegebenes Ziel verspricht. Der Arbeitsbereich kann dann gemäß Block 223 auch mit diesem zweiten Lichtfeld 2b beaufschlagt werden.

Figur 8 zeigt einen beispielhaften Aufbau zur Durchführung des Verfahrens 200. Im Unterschied zu Figur 2 wird der Modulator 5 hier in Reflexion betrieben, und das abbildende optische System 9 zwischen Modulator 5 und Arbeitsbereich 1 ist komplexer. Das optische System 9 umfasst hier eine Linse 9a, einen halbdurchlässigen Dichroid 9b, eine Fourier-Maske 9c sowie ein Objektiv 9d. Das damit im Arbeitsbereich 1 erzeugte Lichtfeld 2 ist von der Art wie in Figur 2 skizziert.

Der in Figur 8 gezeigte Aufbau ermöglicht es, Sekundärlicht 12, das Punktemitter 11 im Arbeitsbereich 1 emittieren, in gerader Linie nach unten durch ein Emissionsfilter 13 und eine Tubuslinse 14 in einen Detektor 15 zu leiten.

### Bezugszeichenliste

- 1: Arbeitsbereich
- 2, 2a-2d: Lichtfeld in Arbeitsbereich 1
- 3: Lichtquelle
- 4: Licht
- 4a, 4b: modulierte Anteile des Lichts 4
- 5: Modulator
- 51: aktive Fläche des Modulators 5
- 51a, 51b: aneinander angrenzende Bereiche auf aktiver Fläche 51
- 52: Pixel der aktiven Fläche 51
- 6, 6a, 6b: Nullstellen-Ansteuermuster
- 60: Sub-Nullstellen-Ansteuermuster als Baustein des Musters 6
- 60a: Sub-Nullstellen-Ansteuermuster, gehörend zu Muster 6a
- 60b: Sub-Nullstellen-Ansteuermuster, gehörend zu Muster 6b
- 6a1-6a3: Sub-Sub-Nullstellen-Ansteuermuster des Musters 6a
- 6b1-6b3: Sub-Sub-Nullstellen-Ansteuermuster des Musters 6b
- 6c1-6c3: periodische Anteile der Sub-Sub-Ansteuermuster 6a1-6a3; 6b1-6b3
- 6d: parametrisierter Ansatz für Nullstellen-Ansteuermuster 6
- 6d': Parameter des Ansatzes 6d
- 6e: Blockier-Ansteuermuster
- 7a, 7b: Nullstellen
- 8a, 8b: Bereiche mit von Null verschiedener Intensität um Nullstellen 7a, 7b
- 9: abbildendes optisches System zwischen Modulator 5 und Bereich 1
- 9a: Linse
- 9b: Dichroid
- 9c: Fourier-Maske
- 9d: Objektiv
- 11: Punktemitter
- 11a-11b: Positionen der Punktemitter 11
- 12: Sekundärlicht, emittiert von Punktemittern 11
- 13: Emissionsfilter
- 14: Tubuslinse
- 15: Detektor
- 100: Verfahren zum Erzeugen des Lichtfelds 2 im Bereich 1
- 110: Zuführen des Lichts 4 zum Modulator 5
- 111: Wahl eines Modulators 5 mit aktiver Fläche 51
- 120: Ansteuern des Modulators 5 mit dem Nullstellen-Ansteuermuster 6
- 121: Ansteuern von Bereichen 51a, 51b mit Phasenunterschied π
- 122: Wechsel zwischen Sub-Nullstellen-Ansteuermustern 6a und 6b
- 123: Aufstellen des parametrisierten Ansatzes 6d
- 124: Optimieren der Parameter 6d'
- 125: Ansteuern mit Blockier-Ansteuermuster 6e
- 126: Bilden des Musters 60 aus Sub-Sub-Ansteuermustern 6a1, 6a2; 6b1, 6b2
- 127: Erzeugen komplexer Amplituden A₁, A₂
- 128: Wahl der Muster 6a1, 6a2; 6b1, 6b2 zur Positionierung der Nullstellen
- 130: Führen des Lichts 4 vom Modulator 5 in den Bereich 1
- 131: Tiefpassfiltern des Lichts 4
- 132: schräges Beleuchten des Modulators 5
- 133: verkleinertes Abbilden mit optischem System 9
- 134: Anordnen von Bereich 1 und Modulator 5 in konjugierten Ebenen
- 135: Anordnen des Modulators in einer Fourier-Ebene
- 136: Anordnen des Modulators in beliebiger optischer Ebene
- 137: Anordnen von Modulatoren in unterschiedlichen optischen Ebenen
- 138: Anordnen 137 in Verbindung mit optischen Elementen
- 200: Verfahren zum Anregen und/oder Verfolgen von Punktemittern 11
- 210: Ermitteln ungefährer Positionen 11a der Punktemitter 11
- 220: Beaufschlagen des Bereichs 1 mit Lichtfeld 2
- 221: Wahl mehrerer Lichtfelder 2a-2d
- 221a: Wahl von mindestens vier Lichtfeldern 2a-2d
- 222: Wahl eines ersten Lichtfelds 2a
- 223: Wahl des neuen Lichtfelds 2b
- 230: Messen des Sekundärlichts 12
- 231: separate Messung 230 für jedes Lichtfeld 2a-2d
- 240: Regeln der Positionen der Nullstellen 7a, 7b
- 250: Auswerten der Position 11a, 11b des Punktemitters 11
- 260: Ermitteln eines neuen Lichtfelds 2b nach Informationsgewinn
- A: komplexe Amplitude
- A₁: komplexe Amplitude des von Muster 6a1, 6b1 beeinflussten Lichts
- A₂: komplexe Amplitude des von Muster 6a2, 6b2 beeinflussten Lichts
- A₃: komplexe Amplitude des von Muster 6a3, 6b3 beeinflussten Lichts
- A₂': Änderung der komplexen Amplitude A₂ durch periodischen Anteil 6c2
- A₃': Änderung der komplexen Amplitude A3 durch periodischen Anteil 6c3
- A*: Überlagerung der komplexen Amplituden A₁, A₂
- A**: Überlagerung der komplexen Amplituden A₁, A₂, A₃
- A***: Überlagerung der komplexen Amplituden A₁, A₂', A₃'
- A*_{,1}: Änderung der Überlagerung A* durch periodischen Anteil 6c1
- A*_{,2}: Änderung der Überlagerung A* durch periodischen Anteil 6c2
- Δϕₐ, Δϕ_{b}: Phasenänderungen, die durch Bereiche 51a, 51b bewirkt werden
- x: Koordinatenrichtung
- x₁, x₂: Positionen einer einzelnen Nullstelle 7a
- x_{1,a}, x_{2,a}: Positionen zweier Nullstellen 7a, 8a, bewirkt durch Muster 60a
- x_{1,3}, x_{2,b}: Positionen zweier Nullstellen 7b, 7b, bewirkt durch Muster 60b

## Patentansprüche

1. Verfahren (100) zum Erzeugen eines Lichtfeldes (2) in einem vorgegebenen Arbeitsbereich (1) mittels einer zumindest teilweisen kohärenten Lichtquelle (3), wobei
• Licht (4) aus der Lichtquelle (3) mindestens einem Modulator (5) zugeführt wird (110), wobei dieser Modulator (5) unterschiedlichen Anteilen (4a, 4b) des Lichts (4) unterschiedliche Änderungen mindestens einer Eigenschaft des Lichts aufprägt,
• der Modulator (5) mit einem Nullstellen-Ansteuermuster (6, 6a, 6b) angesteuert wird (120) dergestalt, dass die Summe der Amplitudenverteilungen der über den Modulator (5) geführten Lichtanteile (4a, 4b) in dem Arbeitsbereich (1) an mindestens zwei unabhängig voneinander vorgebbaren Positionen Nullstellen (7a, 7b) aufweist, wobei diese Nullstellen (7a, 7b) jeweils an Bereiche (8a, 8b) angrenzen, in denen diese Summe der Amplitudenverteilungen von Null verschieden ist, wobei das Nullstellen-Ansteuermuster (6, 6a, 6b) eine räumlichen Verteilung von Bereichen, die die Phase des auf den Modulator (5) auftreffenden Lichts ändern, sowie den jeweiligen lokalen Betrag dieser Phasenänderung angibt, und
• das Licht (4) vom Modulator (5) in den Arbeitsbereich (1) geführt wird (130).

2. Verfahren (100) nach Anspruch 1, wobei ein Modulator (5) mit einer ebenen aktiven Fläche (51) gewählt wird (111), der dazu ausgebildet ist, Lichtanteilen (4a, 4b), die durch die aktive Fläche (51) hindurchtreten und/oder von der aktiven Fläche (51) reflektiert werden, Phasenänderungen (Δϕₐ, Δϕ_{b}) aufzuprägen.

3. Verfahren (100) nach Anspruch 2, wobei mindestens zwei aneinander angrenzende Bereiche (51a, 51b) der aktiven Fläche (51) so angesteuert werden (121), dass zwischen Lichtanteilen (4a, 4b), auf die diese Bereiche (51a, 51b) jeweils wirken, eine mittlere Phasenverschiebung von π für das diese Bereiche (51a, 51b) verlassende Licht eingestellt wird.

4. Verfahren (100) nach einem der Ansprüche 2 bis 3, wobei die aktive Fläche (51) des Modulators in Pixel (52) unterteilt ist, die separat voneinander ansteuerbar sind, wobei der Modulator (5) zu einem ersten Zeitpunkt mit einem ersten Nullstellen-Ansteuermuster (6a) und zu einem zweiten, späteren Zeitpunkt mit mindestens einem zweiten Nullstellen-Ansteuermuster (6b) angesteuert wird (122), wobei sich mindestens zwei Nullstellen-Ansteuermuster (6a, 6b) dahingehend unterscheiden, dass sich die Position mindestens einer Nullstelle (7a, 7b) im Arbeitsbereich (1) um einen geringeren Betrag ändert als sich durch die Translation des ersten Nullstellen-Ansteuermusters (6a) auf der aktiven Fläche (51) des Modulators (5) um ein Pixel (52) ergeben würde.

5. Verfahren nach einem der Ansprüche 1 bis 4, wobei das Nullstellen-Ansteuermuster (6) mehrere Sub-Nullstellen-Ansteuermuster (60) umfasst, welche jeweils eine unabhängige Nullstelle (7a, 7b) erzeugen, indem das von den Sub-Nullstellen-Ansteuermustern (60) jeweils beeinflusste Licht in unterschiedlicher Weise beeinflusst wird.

6. Verfahren (100) nach Anspruch 5, wobei
• mindestens ein Sub-Nullstellen-Ansteuermuster (60) aus mindestens zwei Sub-Sub-Ansteuermustern (6a1, 6a2; 6b1, 6b2) überlagert oder in anderer Weise zusammengesetzt ist (126) und
• das Licht, das durch jedes dieser Sub-Sub-Ansteuermuster (6a1, 6a2; 6b1, 6b2) beeinflusst wird, am vorgegebenen Ort mindestens einer Nullstelle (7a, 7b) jeweils eine komplexe Amplitude (A₁, A₂) erzeugt (127),
• wobei die Sub-Sub-Ansteuermuster (6a1, 6a2) so gewählt sind, dass die Überlagerung (A*) dieser komplexen Amplituden (A₁, A₂) am vorgegebenen Ort der Nullstelle (7a. 7b) Null bzw. ein betragsmäßiges Minimum nahe Null ergibt (128).

7. Verfahren (100) nach Anspruch 6, wobei
• mindestens ein Sub-Nullstellen-Ansteuermuster (60) aus mindestens drei Sub-Sub-Ansteuermustern (6a1, 6a2, 6a3; 6b1, 6b2, 6b3) überlagert oder in anderer Weise zusammengesetzt ist (126a) und
• das Licht, das durch jedes dieser Sub-Sub-Ansteuermuster (6a1, 6a2, 6a3; 6b1, 6b2, 6b3) beeinflusst wird, am vorgegebenen Ort mindestens einer Nullstelle (7a, 7b) jeweils eine komplexe Amplitude (A₁, A₂, A₃) erzeugt (127a),
• wobei die Sub-Sub-Ansteuermuster (6a1, 6a2, 6a3; 6b1, 6b2, 6b3) so gewählt sind, dass die Überlagerung (A*) dieser komplexen Amplituden (A₁, A₂, A₃) im Arbeitsbereich (1) mindestens zwei Nullstellen (7a, 7b) erzeugt (128a).

8. Verfahren (100) nach einem der Ansprüche 6 bis 7, wobei mindestens ein Sub-Sub-Ansteuermuster (6a1, 6a2, 6a3; 6b1, 6b2, 6b3) ein zusätzliches Ansteuer-Element in der Ebene der aktiven Fläche (51) enthält, welches geeignet ist, die durch dieses Sub-Sub-Ansteuermuster (6a1, 6a2, 6a3; 6b1, 6b2, 6b3) erzeugte Amplitudenstärke am vorgegebenen Ort der Nullstelle (7a, 7b) zu beeinflussen.

9. Verfahren (100) nach einem der Ansprüche 1 bis 8, wobei
• ein parametrisierter Ansatz (6d) für das Nullstellen-Ansteuermuster (6, 6a, 6b) aufgestellt wird (123) und wobei die Parameter (6d') dieses Ansatzes (6d) optimiert werden (124) mit dem Ziel, dass die Summe der Amplitudenverteilungen der über den Modulator (5) geführten Lichtanteile (4a, 4b) an den mindestens zwei vorgegebenen Positionen Nullstellen (7a, 7b) aufweist, und/oder
• der Modulator (5) mit einer Überlagerung aus einem Blockier-Ansteuermuster (6e) und dem Nullstellen-Ansteuermuster (6, 6a, 6b) angesteuert wird (125), wobei das Blockier-Ansteuermuster (6e) dahingehend ausgebildet ist, dass das über den Modulator (5) geführte Licht (4) aus dem Arbeitsbereich (1) ferngehalten wird, und/oder
• das Licht zwischen dem Modulator (5) und dem Arbeitsbereich (1) im Ortsfrequenzraum tiefpassgefiltert wird (131), und/oder
• der Modulator (5) von der Lichtquelle (3) in einem schrägen Winkel beleuchtet und in einer Weise angesteuert wird (132), die dahingehend ausgebildet ist, dass Lichtanteile (4), deren Phase nicht durch ein Nullstellen-Ansteuermuster (6, 6a, 6b) geändert wird, aus dem Arbeitsbereich (1) ferngehalten werden.

10. Verfahren (100) nach einem der Ansprüche 1 bis 9, wobei
• das Licht (4) in mehreren unterschiedlichen optischen Ebenen moduliert wird, und/oder
• eine optische Ebene, in der der Modulator (5) angeordnet ist, mit einem optischen System (9) verkleinernd auf den Arbeitsbereich (1) oder auf eine andere optische Ebene abgebildet wird (133), und/oder
• der Arbeitsbereich (1) und der Modulator (5) an optisch zueinander konjugierten Positionen, und/oder in optisch zueinander konjugierten Ebenen, angeordnet werden (134), und/oder
• der Modulator (5) in einer Fourier-Ebene angeordnet wird (135).

11. Verfahren (200) zum Beaufschlagen eines Arbeitsbereichs (1), welcher Punktemitter (11) enthält, mit einem Lichtfeld (2) mit den Schritten:
• mindestens zwei Positionen (11a, 11b), an denen sich Punktemitter (11) im Arbeitsbereich (1) befinden, werden zumindest näherungsweise beschafft (210);
• der Arbeitsbereich (1) wird mit dem Verfahren (100) nach einem der Ansprüche 1 bis 10 mit einem Lichtfeld (2) beaufschlagt (220), das an den beschafften Positionen (11a, 11b) Nullstellen (7a, 7b) aufweist.

12. Verfahren (200) nach Anspruch 11, wobei die Intensität von Sekundärlicht (12), das von den Punktemittern (11) in Antwort auf eine Anregung mit dem Lichtfeld (2) emittiert wird, gemessen wird (230), wobei die Positionen, an denen sich die Nullstellen (7a, 7b) des Lichtfeldes (2) befinden, aktiv geregelt werden (240), so dass die Intensität des Sekundärlichts (12) ein Minimum annimmt oder sich das Minimum gewollt in deren unmittelbarer Nähe befindet.

13. Verfahren (200) nach Anspruch 12, wobei
• der Arbeitsbereich (1) mit mehreren Lichtfeldern (2a-2d) beaufschlagt wird (221), die jeweils an verschiedenen Positionen Nullstellen (7a, 7b) aufweisen;
• die Intensität des Sekundärlichts (12), und/oder die räumliche Verteilung dieser Intensität, für jedes dieser Lichtfelder (2a-2d) gemessen wird (231); und
• aus den Messungen die Position (11a, 11b) mindestens eines Punktemitters (11) im Arbeitsbereich (1) ausgewertet wird (250).

14. Verfahren (200) nach Anspruch 13, wobei mindestens vier Lichtfelder (2a-2d) gewählt werden (221a) und wobei sich die Vereinigungsmenge der Positionen von Nullstellen (7a, 7b) aus allen Lichtfeldern (2a-2d) über drei Raumrichtungen (X, Y, Z) erstreckt.

15. Verfahren (200) nach einem der Ansprüche 12 bis 14, wobei
• der Arbeitsbereich mit einem ersten Lichtfeld (2a) beaufschlagt wird (222);
• nach der Messung (230) der Intensität des Sekundärlichts (12), und/oder der räumlichen Verteilung dieser Intensität, ein zweites Lichtfeld (2b) ermittelt wird (260), welches einen maximalen Informationsgewinn im Hinblick auf ein vorgegebenes Ziel verspricht; und
• der Arbeitsbereich auch mit diesem zweiten Lichtfeld (2b) beaufschlagt wird (223).

## Claims

1. A method (100) for generating a light field (2) in a specified work region (1) by means of an at least partly coherent light source (3), wherein
• light (4) from the light source (3) is fed (110) to at least one modulator (5), with this modulator (5) impressing different changes in at least one property of the light on different components (4a, 4b) of the light (4),
• the modulator (5) is controlled (120) by a zero control pattern (6, 6a, 6b) in such a way that the summation of the amplitude distributions of the light components (4a, 4b) guided via the modulator (5) has zeros (7a, 7b) at at least two positions that are specifiable independently of one another within the work region (1), with these zeros (7a, 7b) each adjoining regions (8a, 8b) in which this summation of the amplitude distributions differs from zero, wherein the zero control pattern (6, 6a, 6b) denotes a spatial distribution of regions which change the phase of the light incident on the modulator (5), as well as the respective local absolute value of this phase change, and
• the light (4) is guided (130) from the modulator (5) into the work region (1).

2. The method (100) of claim 1, wherein a modulator (5) with a plane active surface (51) is chosen (111), said modulator being configured to impress phase changes (Δϕₐ, Δϕ_{b}) on light components (4a, 4b) which pass through the active surface (51) and/or are reflected by the active surface (51).

3. The method (100) of claim 2, wherein at least two adjoining regions (51a, 51b) of the active surface (51) are controlled (121) such that, between the light components (4a, 4b) on which these regions (51a, 51b) respectively act, a mean phase shift of π is set for the light leaving these regions (51a, 51b).

4. The method (100) of any one of claims 2 to 3, wherein the active surface (51) of the modulator is subdivided into pixels (52) which are controllable separately from one another, wherein the modulator (5) is controlled (122) using a first zero control pattern (6a) at a first time and using a second zero control pattern (6b) at a second, later time, wherein at least two zero control patterns (6a, 6b) differ to the effect that the position of at least one zero (7a, 7b) in the work region (1) changes by a smaller absolute value than the change that would arise from the translation of the first zero control pattern (6a) on the active surface (51) of the modulator (5) by one pixel (52).

5. The method of any one of claims 1 to 4, wherein the zero control pattern (6) comprises a plurality of zero control sub-patterns (60) that each generate an independent zero (7a, 7b) by virtue of the light respectively influenced by the zero control sub-patterns (60) being influenced in different ways.

6. The method (100) of claim 5, wherein
• at least one zero control sub-pattern (60) is superimposed or otherwise composed (126) from at least two control sub-sub-patterns (6a1, 6a2; 6b1, 6b2) and
• the light influenced by each of these control sub-sub patterns (6a1, 6a2; 6b1, 6b2) in each case generates (127) a complex amplitude (A₁, A₂) at the specified location of at least one zero (7a, 7b),
• wherein the control sub-sub-patterns (6a1, 6a2) are chosen such that the superposition (A*) of these complex amplitudes (A₁, A₂) at the specified location of the zero (7a, 7b) yields (128) zero or a minimum in terms of absolute value that is near zero.

7. The method (100) of claim 6, wherein
• at least one zero control sub-pattern (60) is superimposed or otherwise composed (126a) from at least three control sub-sub-patterns (6a1, 6a2, 6a3; 6b1, 6b2, 6b3) and
• the light influenced by each of these control sub-sub-patterns (6a1, 6a2, 6a3; 6b1, 6b2, 6b3) in each case generates (127a) a complex amplitude (A₁, A₂, A₃) at the specified location of at least one zero (7a, 7b),
• wherein the control sub-sub-patterns (6a1, 6a2, 6a3; 6b1, 6b2, 6b3) are chosen such that the superposition (A*) of these complex amplitudes (A₁, A₂, A₃) generates (128a) at least two zeros (7a, 7b) in the work region (1).

8. The method (100) of any one of claims 6 to 7, wherein at least one control sub-sub-pattern (6a1, 6a2, 6a3; 6b1, 6b2, 6b3) comprises an additional control element in the plane of the active surface (51), said additional control element being suitable for influencing the amplitude strength generated by this control sub-sub-pattern (6a1, 6a2, 6a3; 6b1, 6b2, 6b3) at the specified location of the zero (7a, 7b).

9. The method (100) of any one of claims 1 to 8, wherein
• a parametrized approach (6d) for the zero control pattern (6, 6a, 6b) is set up (123), and wherein the parameters (6d') of this approach (6d) are optimized (124) with the goal that the summation of the amplitude distributions of the light components (4a, 4b) guided via the modulator (5) has zeros (7a, 7b) at the at least two specified positions, and/or
• the modulator (5) is controlled (125) with a superposition of a blocking control pattern (6e) and a zero control pattern (6, 6a, 6b), wherein the blocking control pattern (6e) is configured to the effect that the light (4) guided via the modulator (5) is kept away from the work region (1), and/or
• the light between the modulator (5) and the work area (1) is low-pass-filtered (131) in the spatial frequency domain, and/or
• the modulator (5) is illuminated by the light source (3) at an oblique angle and is controlled (132) in a manner that is configured such that light components (4) whose phase is not changed by a zero control pattern (6, 6a, 6b) are kept away from the work region (1).

10. The method (100) of any one of claims 1 to 9, wherein
• the light (4) is modulated in several different optical planes, and/or
• an optical plane in which the modulator (5) is arranged is imaged (133) onto the work region (1) or onto another optical plane in a size-reducing manner with an optical system (9), and/or
• the work region (1) and the modulator (5) are arranged (134) at optically conjugate positions, and/or in optically conjugate planes, and/or
• the modulator (5) is arranged (135) in a Fourier plane.

11. A method (200) for subjecting a work region (1) containing point emitters (11) to a light field (2), comprising the steps of:
• at least approximately obtaining (210) at least two positions (11a, 11b) at which point emitters (11) are located in the work region (1);
• subjecting (220), by the method (100) according to any one of claims 1 to 10, the work region (1) to a light field (2) having zeros (7a, 7b) at the obtained positions (11a, 11b).

12. The method (200) of claim 11, wherein the intensity of secondary light (12) emitted by the point emitters (11) in response to an excitation with the light field (2) is measured (230), wherein the positions at which the zeros (7a, 7b) of the light field (2) are located are actively controlled (240) such that the intensity of the secondary light (12) assumes a minimum, or the minimum is deliberately located in their immediate vicinity.

13. The method (200) of claim 12, wherein
• the work region (1) is subjected (221) to several light fields (2a-2d) that each have zeros (7a, 7b) at different positions;
• the intensity of the secondary light (12), and/or the spatial distribution of this intensity, is measured (231) for each of these light fields (2a-2d); and
• from the measurements, the position (11a, 11b) of at least one point emitter (11) in the work region (1) is evaluated (250).

14. The method (200) of claim 13, wherein at least four light fields (2a-2d) are chosen (221a), and wherein the union set of the positions of zeros (7a, 7b) from all light fields (2a-2d) extends over three spatial directions (X, Y, Z).

15. The method (200) according to any one of claims 12 to 14, wherein
• the work region is subjected (222) to a first light field (2a);
• after measuring (230) the intensity of the secondary light (12), and/or the spatial distribution of this intensity, a second light field (2b) is determined (260) which promises a maximum information gain in view of a predetermined goal; and
• the work region is also subjected (223) to this second light field (2b).

## Revendications

1. Procédé (100) destiné à générer un champ lumineux (2) dans une zone de travail (1) spécifiée au moyen d'une source lumineuse (3) au moins partiellement cohérente, dans lequel
• de la lumière (4) provenant de la source lumineuse (3) est amenée (110) à au moins un modulateur (5), dans lequel ce modulateur (5) applique différents changements d'au moins une propriété de la lumière, à différentes portions (4a, 4b) de la lumière (4),
• le modulateur (5) est piloté (120) avec un modèle de pilotage de zéros (6, 6a, 6b) de telle sorte que la somme des répartitions d'amplitude des portions lumineuses (4a, 4b) guidées par l'intermédiaire du modulateur (5) comporte des zéros (7a, 7b) dans au moins deux positions pouvant être spécifiées indépendamment l'une de l'autre dans la zone de travail (1), dans lequel ces zéros (7a, 7b) sont respectivement adjacents à des zones (8a, 8b) dans lesquelles la somme des répartitions d'amplitude est différente de zéro, dans lequel le modèle de pilotage de zéros (6, 6a, 6b) indique une répartition spatiale de zones qui changent la phase de la lumière incidente sur le modulateur (5), ainsi que la grandeur locale respective de ce changement de phase, et
• la lumière (4) est guidée (130) par le modulateur (5) dans la zone de travail (1).

2. Procédé (100) selon la revendication 1, dans lequel un modulateur (5) avec une surface active plane (51) est choisi (111), qui est conçu pour appliquer des changements de phase (Δϕₐ, Δϕ_{b}) à des portions lumineuses (4a, 4b) qui passent à travers la surface active (51) et/ou sont réfléchies par la surface active (51).

3. Procédé (100) selon la revendication 2, dans lequel au moins deux zones adjacentes l'une à l'autre (51a, 51b) de la surface active (51) sont pilotées (121) de sorte qu'entre des portions lumineuses (4a, 4b) sur lesquelles agissent respectivement ces zones (51a, 51b), un déphasage moyen π est réglé pour la lumière quittant ces zones (51a, 51b).

4. Procédé (100) selon l'une des revendications 2 à 3, dans lequel la surface active (51) du modulateur est subdivisée en pixels (52) qui peuvent être pilotés séparément les uns des autres, dans lequel le modulateur (5) est piloté (122) avec un premier modèle de pilotage de zéros (6a) à un premier instant et avec au moins un second modèle de pilotage de zéros (6b) à un second instant ultérieur, dans lequel au moins deux modèles de pilotage de zéros (6a, 6b) diffèrent en ce que la position d'au moins un zéro (7a, 7b) change dans la zone de travail (1) d'une valeur plus faible que ce qui serait obtenu par la translation du premier modèle de pilotage de zéros (6a) d'un pixel (52) sur la surface active (51) du modulateur (5).

5. Procédé selon l'une des revendications 1 à 4, dans lequel le modèle de pilotage de zéros (6) comprend plusieurs sous-modèles de pilotage de zéros (60) qui génèrent respectivement un zéro indépendant (7a, 7b), d'une manière différente par le fait que la lumière respectivement influencée par le sous-modèle de pilotage de zéros (60) est influencée de différentes manières.

6. Procédé (100) selon la revendication 5, dans lequel
• au moins un sous-modèle de pilotage de zéros (60) constitué d'au moins deux sous-sous-modèles de pilotage (6a1, 6a2 ; 6b1, 6b2) est superposé ou composé (126) d'une autre manière, et
• la lumière qui est influencée par chacun de ces sous-sous-modèles de pilotage (6a1, 6a2 ; 6b1, 6b2) génère (127) respectivement une amplitude complexe (A₁, A₂) à l'emplacement spécifié d'au moins un zéro (7a, 7b),
• dans lequel les sous-sous-modèles de pilotage (6a1, 6a2) sont choisis de telle sorte que la superposition (A*) de ces amplitudes complexes (A₁, A₂) à l'emplacement spécifié du zéro (7a, 7b) donne (128) zéro ou un minimum en termes de grandeur qui est proche de zéro.

7. Procédé (100) selon la revendication 6, dans lequel
• au moins un sous-modèle de pilotage de zéros (60) constitué d'au moins trois sous-sous-modèles de pilotage (6a1, 6a2, 6a3 ; 6b1, 6b2, 6b3) est superposé ou composé (126a) d'une autre manière et
• la lumière qui est influencée par chacun de ces sous-sous-modèles de pilotage (6a1, 6a2, 6a3 ; 6b1, 6b2, 6b3) génère (127a) respectivement une amplitude complexe (A₁, A₂, A₃) à l'emplacement spécifié d'au moins un zéro (7a, 7b),
• dans lequel les sous-sous-modèles de pilotage (6a1, 6a2, 6a3 ; 6b1, 6b2, 6b3) sont choisis de telle sorte que la superposition (A*) de ces amplitudes complexes (A₁, A₂, A₃) génère (128a) au moins deux zéros (7a, 7b) dans la zone de travail (1).

8. Procédé (100) selon l'une des revendications 6 à 7, dans lequel au moins un sous-sous-modèle de pilotage (6a1, 6a2, 6a3 ; 6b1, 6b2, 6b3) contient un élément de pilotage supplémentaire dans le plan de la surface active (51), qui est adapté pour influencer la grandeur de l'amplitude générée par ce sous-sous-modèle de pilotage (6a1, 6a2, 6a3 ; 6b1, 6b2, 6b3) à l'emplacement spécifié du zéro (7a, 7b).

9. Procédé (100) selon l'une des revendications 1 à 8, dans lequel
• une formulation paramétrée (6d) est établie (123) pour le modèle de pilotage de zéros (6, 6a, 6b) et dans lequel les paramètres (6d') de cette formulation (6d) sont optimisés (124), l'objectif étant que la somme des répartitions d'amplitude des portions lumineuses (4a, 4b) guidées par l'intermédiaire du modulateur (5) comporte des zéros (7a, 7b) dans au moins deux positions spécifiées, et/ou
• le modulateur (5) est piloté (125) par une superposition d'un modèle de pilotage de blocage (6e) et du modèle de pilotage de zéros (6, 6a, 6b), dans lequel le modèle de pilotage de blocage (6e) est configuré de telle sorte que la lumière (4) guidée par l'intermédiaire du modulateur (5) est maintenue à distance de la zone de travail (1), et/ou
• la lumière entre le modulateur (5) et la zone de travail (1) est soumise à un filtrage passe-bas (131) dans l'espace des fréquences spatiales, et/ou
• le modulateur (5) est éclairé par la source lumineuse (3) à un angle oblique et est piloté (132) d'une manière qui est conçue de telle sorte que des portions lumineuses (4), dont la phase n'est pas modifiée par un modèle de pilotage de zéros (6, 6a, 6b), sont maintenues à distance de la zone de travail (1).

10. Procédé (100) selon l'une des revendications 1 à 9, dans lequel
• la lumière (4) est modulée dans plusieurs plans optiques différents, et/ou
• un plan optique, dans lequel le modulateur (5) est représenté (133) avec une taille réduite sur la zone de travail (1) ou sur un autre plan optique (133), en utilisant un système optique (9), et/ou
• la zone de travail (1) et le modulateur (5) sont agencés (134) à des positions optiquement conjuguées et/ou dans des plans optiquement conjugués, et/ou
• le modulateur (5) est agencé (135) dans un plan de Fourier.

11. Procédé (200) pour soumettre une zone de travail (1) qui contient un émetteur ponctuel (11), à un champ lumineux (2), comportant les étapes de :
• obtenir (210) au moins approximativement au moins deux positions (11a, 11b) auxquelles des émetteurs ponctuels (11) se trouvent dans la zone de travail (1) ;
• soumettre (220) la zone de travail (1) à un champ lumineux (2) par le procédé (100) selon l'une des revendications 1 à 10, lequel champ lumineux comporte des zéros (7a, 7b) aux positions (11a, 11b) obtenues.

12. Procédé (200) selon la revendication 11, dans lequel l'intensité de la lumière secondaire (12), qui est émise par les émetteurs ponctuels (11) en réponse à une excitation par le champ lumineux (2), est mesurée (230), dans lequel les positions auxquelles les zéros (7a, 7b) du champ lumineux (2) se situent, sont activement régulées (240) de sorte que l'intensité de la lumière secondaire (12) adopte un minimum ou le minimum est délibérément au voisinage direct de ceux-ci.

13. Procédé (200) selon la revendication 12, dans lequel
• la zone de travail (1) est soumise (221) à plusieurs champs lumineux (2a-2d) qui comportent respectivement des zéros (7a, 7b) à différentes positions ;
• l'intensité de la lumière secondaire (12) et/ou la répartition spatiale de cette intensité est mesurée (231) pour chacun de ces champs lumineux (2a-2d) ; et
• la position (11a, 11b) d'au moins un émetteur ponctuel (11) dans la zone de travail (1) est évaluée (250) à partir des mesures.

14. Procédé (200) selon la revendication 13, dans lequel au moins quatre champs lumineux (2a-2d) sont choisis (221a) et dans lequel la quantité cumulée des positions des zéros (7a, 7b) provenant de tous les champs lumineux (2a-2d) s'étend dans trois directions spatiales (X, Y, Z).

15. Procédé (200) selon l'une des revendications 12 à 14, dans lequel
• la zone de travail est soumise (222) à un premier champ lumineux (2a) ;
• après la mesure (230) de l'intensité de la lumière secondaire (12) et/ou de la répartition spatiale de cette intensité, un second champ lumineux (2b) est déterminé, qui laisse présager un gain d'informations maximal au regard d'une cible spécifiée; et
• la zone de travail est également soumise (223) à ce second champ lumineux (2b).
